# EUROPEAN PATENT SPECIFICATION

(11) **EP 3 461 071 B1**
(45) Date of publication and mention of the grant of the patent: **09.12.2020**
(21) Application number: 16902712.5
(22) Date of filing: 26.05.2016
(51) Int. Cl.: H04W 36/12, H04W 76/10, H04W 36/00

(54) **COMMUNICATION CONTROL METHOD, AND RELATED NETWORK ELEMENT**
KOMMUNIKATIONSSTEUERUNGSVERFAHREN UND ZUGEHÖRIGES NETZWERKELEMENT
PROCÉDÉ DE CONTRÔLE DE COMMUNICATION ET ÉLÉMENT DE RÉSEAU ASSOCIÉ

(43) Date of publication of application: 27.03.2019
(73) Proprietor: Huawei Technologies Co., Ltd., Longgang District Shenzhen, Guangdong 518129 (CN)
(72) Inventor: NI, Hui, Shenzhen Guangdong 518129 (CN); LI, Yongcui, Shenzhen Guangdong 518129 (CN)
(74) Representative: Gill Jennings & Every LLP
(86) International application number: PCT/CN2016/083568
(87) International publication number: WO 2017/201722

(56) References cited:
- EP-A1- 3 337 105
- WO-A1-2016/030724
- CN-A- 101 166 145
- CN-A- 101 667 974
- CN-A- 102 090 038
- CN-A- 104 519 121
- US-A1- 2015 092 551

## Description

### TECHNICAL FIELD

The present disclosure relates to the field of communications technologies, and in particular, to a communication control method and a related network element.

### BACKGROUND

An evolved packet system (Evolved Packet System, EPS) includes two parts: an access network and a core network. The access network is an evolved universal terrestrial radio access network (Evolved Universal Terrestrial Radio Access Network, E-UTRAN) configured to implement wireless access related functions. Key logical network elements in an evolved packet core network (Evolved Packet Core, EPC) include a mobility management entity (Mobility Management Entity, MME), a serving gateway (Serving Gateway, S-GW), a packet data network gateway (Packet Data Network Gateway, P-GW), and a home subscriber server (Home Subscriber Server, HSS).

The MME mainly implements processing of a signaling plane function, for example, user authentication and handover, mobility management of a user terminal in an idle state, and management of a user context and a bearer. The HSS stores user subscription information. The S-GW is a user plane function entity for implementing routing and forwarding of packet data, and serves as a data anchor in a 3rd Generation Partnership Project (the 3rd Generation Partnership Project, 3GPP) system to terminate an interface of the universal terrestrial radio access network (Evolved Universal Terrestrial Radio Access Network, E-UTRAN). In addition, the S-GW is a local mobility management anchor in an E-UTRAN handover scenario in a geographical area. The P-GW is a gateway connected to an external data network, and is a user plane anchor between a 3GPP access network and a non 3GPP access network. User equipment may connect to the P-GW and establish a public data network (Public Data Network, PDN) connection to access an external packet data network. The PDN may be the Internet, a virtual private network (Virtual Private Network, VPN), an IP multimedia service (IP Multimedia Service, IMS) network, a Wireless Application Protocol (Wireless Application Protocol, WAP) network provided by an operator, or the like. In an EPC architecture, for an IP of the user terminal, the P-GW provides a routing function externally. Therefore, after the user terminal moves, an IP of a service flow of the user terminal and uplink and downlink paths need to be anchored on a source P-GW, to ensure continuity of the Internet Protocol (Internet Protocol, IP). However, after the user terminal moves, this causes a relatively long service flow path, further causes a relatively long latency, and causes poor user experience.

To satisfy an ultra-low latency service requirement, the following three manners are mainly used in the prior art. 1. A Border Gateway Protocol (Border Gateway Protocol, BGP) route advertisement solution is used to exchange network reachability information with another BGP system, to effectively construct an autonomous system interconnection topology and clear a routing loop. A disadvantage of this solution is that fragments are generated in an IP routing table of each user terminal and an IP routing table of a server granularity. 2. A software defined network (Software Defined Network, SDN) routing solution is used, where a control plane and a user plane of a network device are separated and a manner of centralized deployment of the control plane and distributed deployment of the user plane is used to resolve a latency problem. A disadvantage of this solution is that it depends on deployment of a new network mechanism. 3. A Multipath Transmission Control Protocol (Multipath Transmission Control Protocol, MPTCP) technology is used. As a protocol improved over TCP, MPTCP allows a plurality of sub channels to be established on one TCP link, and can select any one of the plurality of sub channels for sending data. A disadvantage of this solution is that it depends on deployment of a new network mechanism.

US2015092551 relates to session-aware service chaining within computer networks. CN102090038 relates to fixed mobile convergence (FMC) architectures. CN104519121 relates to session-aware service chaining within computer networks. CN101667974 relates to method and network processor for realizing H QoS (hierarchical quality of service).

### SUMMARY

Aspects of the present disclosure provide a communication control method and a related network element, to provide an end-to-end service packet routing mechanism.

Various aspects of the present disclosure have been defined in the independent claims. Further technical features of each of these aspects have been defined in the respective dependent claims.

Based on one aspect of the present disclosure, the control plane network element determines the first service network element and the first forwarding plane network element, and then establishes the service packet forwarding path between the first service network element and the first forwarding plane network element, to provide an end-to-end service packet routing mechanism.

Based on another aspect of the present disclosure, after receiving the handover notification of the user terminal, the control plane network element establishes the new service packet forwarding path between the second service network element and the second forwarding plane network element to transmit the service packet of the user terminal and implement switching of the service packet forwarding path.

Based on yet another aspect of the present disclosure, the control plane network element sends the context transfer request to the first server to transfer the service context information, thereby ensuring that the context information is lossless during the handover.

### BRIEF DESCRIPTION OF DRAWINGS

To describe the technical solutions in the aspects of the present disclosure or in the prior art more clearly, the following briefly describes the accompanying drawings required for describing the aspects. Apparently, the accompanying drawings in the following description show merely some aspects of the present disclosure, and a person of ordinary skill in the art may still derive other drawings from these accompanying drawings without creative efforts.
FIG. 1 is a schematic architectural diagram of a control system according to an aspect of the present disclosure;
FIG. 2 is a schematic flowchart of a communication control method according to an aspect of the present disclosure;
FIG. 3 is a schematic diagram of information exchange in a communication control method according to an aspect of the present disclosure;
FIG. 4 is a schematic flowchart of another communication control method according to an aspect of the present disclosure;
FIG. 5 is a schematic diagram of information exchange in another communication control method according to an aspect of the present disclosure;
FIG. 6 is a schematic modular diagram of a control plane network element according to an aspect of the present disclosure;
FIG. 7 is a schematic structural diagram of a control plane network element according to an aspect of the present disclosure;
FIG. 8 is a schematic modular diagram of a first service network element according to an aspect of the present disclosure;
FIG. 9 is a schematic structural diagram of a first service network element according to an aspect of the present disclosure;
FIG. 10 is a schematic modular diagram of a first forwarding plane network element according to an aspect of the present disclosure; and
FIG. 11 is a schematic structural diagram of a first forwarding plane network element according to an aspect of the present disclosure.

### DESCRIPTION OF ASPECTS

To make the disclosure objectives, features, and advantages of the present disclosure clearer and more comprehensible, the following clearly and completely describes the technical solutions in the aspects of the present disclosure with reference to the accompanying drawings in the aspects of the present disclosure. Apparently, the aspects described in the following are merely some rather than all of the aspects of the present disclosure. All other aspects obtained by a person of ordinary skill in the art based on the aspects of the present disclosure without creative efforts shall fall within the protection scope of the present disclosure.

To help understand the aspects of the present disclosure, the following describes in detail related network elements in the aspects of the present disclosure.
(1) A user terminal (User Equipment, UE) is a network terminal device, including a mobile terminal device, a network access terminal device, an Internet of Things terminal device, or the like.
(2) A base station (Base Station, BS) is a device providing wireless access for the user terminal, including a Long Term Evolution (Long Term Evolution, LTE) base station, a Wi-Fi access point, a 5G base station, a Worldwide Interoperability for Microwave Access (Worldwide Interoperability for Microwave Access, WiMAX) base station, or the like.
(3) A control plane network element is a network element responsible for mobility management or forwarding path management in a mobile network, and may be an MME, a P-GW, a P-GW control plane, an S-GW, an S-GW control plane, or a network element integrating the foregoing network elements and having all or some functions of a mobile gateway controller.
(4) A forwarding plane network element is a network element that is responsible for anchoring an IP address for a user and has a service forwarding function, and may be a P-GW or a P-GW forwarding plane in an EPC network, or a physical or virtual forwarding device such as a router, a switch, or an SDN switch.
(5) A service network element is a server providing a service for the user terminal or a service access network element of a server.
(6) A management system may be a management and orchestration system, a mobile-edge computing system, a capability exposure platform, or the like.

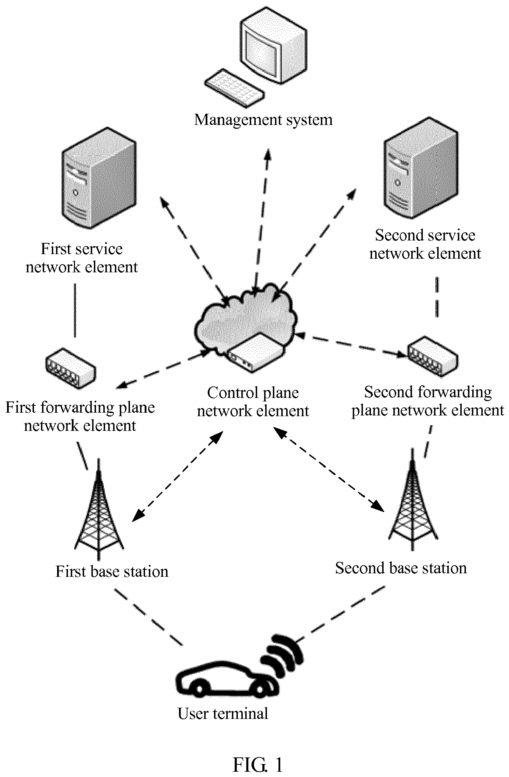

The following first describes a schematic architectural diagram of a control system in an aspect of the present disclosure. FIG. 1 is a schematic architectural diagram of a control system according to an aspect of the present disclosure. In FIG. 1, mainly the following network elements are included: UE, a first base station BS 1, a second base station BS 2, a first forwarding plane network element, a second forwarding plane network element, a control plane network element, a management system, a first service network element, and a second service network element. The control plane network element is configured to control establishment of a first communications link and a second communications link. The management system may be a management and orchestration (Management and Orchestration, MANO) system, a mobile-edge computing (Mobile-edge Computing, MEC) system, or a service capability exposure platform, and may be configured to perform signaling exchange with the control plane network element and deploy the service network element and/or the forwarding plane network element, and the like in this aspect of the present disclosure. The service network element may be a server providing a service for the UE or a service access network element of a server providing a service for the UE.

Before the UE moves, the UE accesses the first service network element through the first communications link passing through the network elements BS 1 and first forwarding plane network element. After the UE starts to move, the UE is handed over from the BS 1 to the BS 2, and the UE accesses the second service network element through the first communications link passing through the network elements BS 2 and second forwarding plane network element, and at the same time, resources on the original first communications link are deleted. In this aspect of the present disclosure, to reduce a communication latency, a forwarding path is established between the forwarding plane network element and the service network element, where the forwarding path includes a forwarding tunnel corresponding to a service flow identifier or a forwarding policy corresponding to a service flow identifier. When the forwarding path is a forwarding tunnel, the forwarding tunnel may be a dynamic service packet forwarding tunnel at a service flow granularity, for transmitting a service packet of the user terminal, where the tunnel may be an IP in IP tunnel, or may be a General Packet Radio Service Tunneling Protocol (General Packet Radio Service Tunneling Protocol, GTP) or Generic Routing Encapsulation protocol (Generic Routing Encapsulation, GRE) tunnel.

In this aspect and all other aspects of the present disclosure, none of the first service network element, the first forwarding plane network element, the second service network element, and the second forwarding plane network element specially denotes a definite network element. The first service network element and the first forwarding plane network element may be understood as an accessed service network element and an accessed forwarding plane network element. The second service network element and the second forwarding plane network element may be understood as a service network element and a forwarding plane network element after a handover.

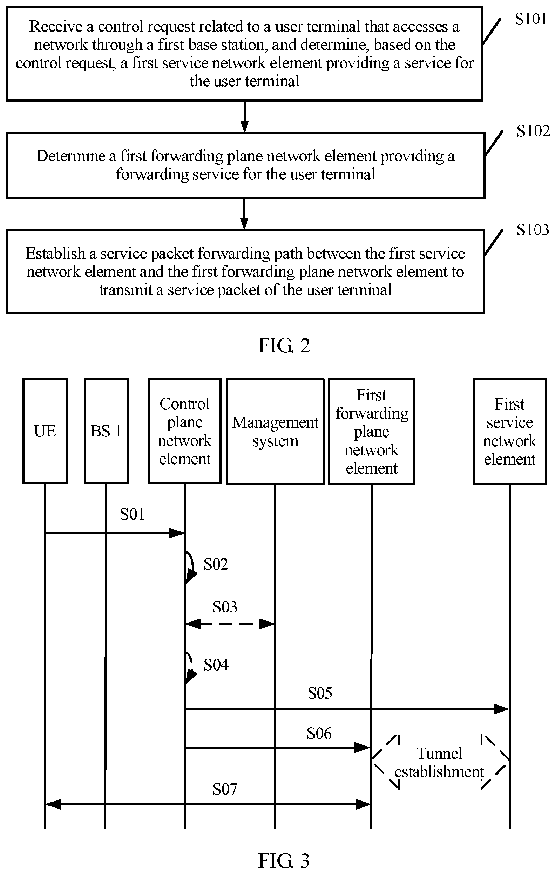

FIG. 2 is a schematic flowchart of a communication control method according to an aspect of the present disclosure. As shown in FIG. 2, the communication control method provided by this aspect of the present disclosure may include steps S101 to S103.

S101. Receive a control request related to a user terminal that accesses a network through a first base station, and determine, based on the control request, a first service network element providing a service for the user terminal.

Specifically, a control plane network element receives the control request related to the user terminal that accesses the network through the first base station, and determines, based on the control request, the first service network element providing the service for the user terminal. In this aspect of the present disclosure, the user terminal may send, through a base station or a service function exposure platform, the control request related to the user terminal to the control plane network element, or send, based on a subscription data change of a home subscriber server, the control request related to the user terminal to the control plane network element. The control request may be an access request or a service request, where the access request optionally carries service indication information of the terminal and current location information of the terminal, and the service request carries service indication information used to indicate a specific service that the user terminal accesses. After receiving the control request related to the user terminal that accesses the network through the first base station, the control plane network element may determine, based on the service indication information in the control request or the like, the first service network element providing the service for the user terminal. The first service network element may be a first server providing a service for the user terminal or a service access network element of a first server providing a service for the user terminal. In this aspect of the present disclosure, the control plane network element needs to complete establishment of a path between the first base station and the first forwarding plane network element and a path between the first forwarding plane network element and the first service network element.

S102. Determine a first forwarding plane network element providing a forwarding service for the user terminal.

Specifically, the control plane network element determines the first forwarding plane network element providing the forwarding service for the user terminal.

In this aspect of the present disclosure, the control plane network element may determine, from a plurality of deployed forwarding plane network elements based on a current location of the user terminal, or a current location of a base station providing an access service for the terminal, and a service type, the first forwarding plane network element providing the forwarding service for the user terminal. The control plane network element may also send an identification request to a management system. When the management system determines that no first forwarding plane network element is suitable for providing a service for the user terminal, the management system deploys a first forwarding plane network element in proximity for the user terminal based on the current location information of the user terminal and/or the service type. The management system may further deploy a first forwarding plane network element in proximity for the user terminal based on current location information of the base station providing the access service for the user terminal and/or the service type.

Optionally, if a first forwarding plane network element serving the user terminal already exists in the network, when the control request is a service request, the service request may further carry an IP address of the first forwarding plane network element. In this case, the control plane network element determines, based on the received service request, the first forwarding plane network element serving the user terminal. The service request may further carry a TEID of the first forwarding plane network element. Optionally, the control plane network element may further determine, based on the service indication information and the current location information of the terminal in the service request, whether the existing first forwarding plane network element is suitable for providing a corresponding service for the user terminal. If the existing first forwarding plane network element is not suitable, the control plane network element may redetermine a new forwarding plane network element. A determining method is the same as above, and is not described again herein.

S103. Establish a service packet forwarding path between the first service network element and the first forwarding plane network element to transmit a service packet of the user terminal.

Specifically, the control plane network element establishes the service packet forwarding path between the first service network element and the first forwarding plane network element to transmit the service packet of the user terminal. In this aspect of the present disclosure, the control plane network element may exchange signaling with the forwarding plane network element and the service network element to establish the service packet forwarding path between the first service network element and the first forwarding plane network element providing the forwarding service for the user terminal, to transmit the service packet of the user terminal. The service packet forwarding path may include a forwarding tunnel corresponding to a service flow identifier or a forwarding policy corresponding to a service flow identifier.

The first service network element and the first forwarding plane network element store a correspondence between the service flow identifier and the forwarding path. When the first service network element or the first forwarding plane network element receives a service packet carrying the service flow identifier, the forwarding path corresponding to the service flow identifier may be determined based on the correspondence between the service flow identifier and the forwarding path, and then the service packet is forwarded through the forwarding path corresponding to the service flow identifier.

When the service packet forwarding path is the forwarding tunnel corresponding to the service flow identifier, a process of establishing the forwarding tunnel is as follows: The control plane network element may send a first session establishment request to the first service network element, where the first session establishment request carries an IP of the first forwarding plane network element, and send a second session request to the first forwarding plane network element, where the second session request carries an IP of the first service network element, so that the first forwarding plane network element and the first service network element learn IPs of each other, and therefore establish the service packet forwarding tunnel, where the tunnel may be an IP in IP tunnel, and the IP of the service network element is used to identify a tunnel endpoint at the service network element end of the IP in IP tunnel between the first forwarding plane network element and the service network element. Optionally, the first session establishment request further carries the service flow identifier, and/or the second session establishment request further carries the service flow identifier. The service flow identifier is at least one of an IP of the user terminal, a port number of the user terminal, an IP of the server, or a port number of the server.

Because the tunnel may be a GTP tunnel or a GRE tunnel in addition to an IP in IP tunnel, when the tunnel is a GTP tunnel, a process of establishing the tunnel between the first service network element and the first forwarding plane network element is as follows: The control plane network element sends a first session establishment request to the first service network element, where the first session establishment request carries an IP of the first forwarding plane network element and a tunnel endpoint identifier (Tunnel Endpoint Identifier, TEID) of the first forwarding plane network element; and the first service network element sends a first session response message to the control plane network element, where the first session response message carries an endpoint identifier of the first service network element; and the control plane network element sends the second session establishment request to the first forwarding plane network element, where the second session response message carries an IP of the first service network element and a tunnel endpoint identifier TEID of the first service network element.

Optionally, the control plane network element delivers, to the first service network element, the forwarding policy carrying the service flow identifier, so that the first service network element forwards, based on the forwarding policy, the service packet corresponding to the service flow identifier; and/or the control plane network element delivers, to the first forwarding plane network element, the forwarding policy carrying the service flow identifier, so that the first forwarding plane network element forwards, based on the forwarding policy, the service packet corresponding to the service flow identifier.

Specifically, the forwarding path between the first service network element and the first forwarding plane network element may be further implemented in a multi-hop forwarding manner based on the forwarding policy or a service chaining manner. When the forwarding path between the first service network element and the first forwarding plane network element is implemented by the forwarding policy corresponding to the service flow identifier, a process of establishing the forwarding path between the first service network element and the first forwarding plane network element is as follows: The control plane network element or a forwarding policy controller may deliver, to the first forwarding plane network element, the forwarding policy carrying the service flow identifier, so that the first service network element forwards, based on the forwarding policy, the service packet corresponding to the service flow identifier; the control plane or a forwarding policy controller may deliver, to the first service network element, the forwarding policy carrying the service flow identifier, so that the first forwarding plane network element can forward, based on the forwarding policy, the service packet corresponding to the service flow identifier; or the control plane or a forwarding policy controller may further deliver the forwarding policy to each forwarding node between the first forwarding plane network element and the first service network element, so that each forwarding node can forward, based on the forwarding policy, the service packet corresponding to the service flow identifier. The control plane network element or the forwarding policy controller may perform at least one of the foregoing forwarding path establishment processes, and the forwarding policies sent to the first service network element, the second forwarding plane network element, and each forwarding node may be the same or may be different.

Optionally, the control plane or the forwarding policy controller may configure the forwarding policy on the first forwarding plane network element and/or the first service network element in a preconfiguration manner. Further optionally, the forwarding policy is configured on each forwarding node between the first forwarding plane network element and the first service network element in a preconfiguration manner. The forwarding policy may include the following information: the service flow identifier and a packet forwarding action. The service flow identifier includes at least one of the following: the IP of the user terminal, the IP of the server, the port number of the user terminal, or the port number of the server. The packet forwarding action is forwarding the packet through a specific port or a specific link.

It should also be noted that, when an SDN solution is used between the first forwarding plane network element and the control plane network element, a specific process of step S103 is described as follows: The control plane network element establishes the service packet forwarding path between the first service network element and the first forwarding plane network element to transmit the service packet of the user terminal. Specifically, the control plane network element delivers, to the first forwarding plane network element, the forwarding policy corresponding to the service flow identifier, where the forwarding policy is used to establish the service packet forwarding path between the first forwarding plane network element and the first service network element, and the forwarding policy corresponding to the service flow identifier may be sent in a form of a flow table in the OpenFlow protocol, and the control plane network element delivers a first session establishment request to the first service network element, where the first session establishment request carries the IP of the first forwarding plane network element.

Optionally, the IP of the first service network element may be determined by the control plane network element and the management system, and a specific process may be as follows: The control plane network element sends an identification request to the management system, where the identification request carries the service type, or carries the current location information of the user terminal and the service type, and the service type is determined based on the control request message received in step S101 or determined by the control plane network element based on subscription information of the terminal; and then the management system sends an identification response message carrying the IP of the first service network element and/or the IP of the first forwarding plane network element to the control plane network element. When receiving the identification request, if the management system determines that no first forwarding plane network element and/or first service network element are/is suitable for providing a service for the user terminal, the management system deploys a first forwarding plane network element and/or a first service network element in proximity for the user terminal based on the current location information of the user terminal and/or the service type.

Optionally, the control request may carry the current location information of the user terminal. The control plane network element may determine the first service network element based on the current location information of the user terminal and preconfiguration information, and obtain the IP of the first service network element; or may determine the first forwarding plane network element based on the current location information of the user terminal and preconfiguration information, and obtain the IP of the first forwarding plane network element.

As can be seen from above, in this aspect of the present disclosure, the control plane network element establishes the service packet forwarding path between the first service network element and the first forwarding plane network element to transmit the service packet of the user terminal, thereby providing an end-to-end service packet routing mechanism.

FIG. 3 is a schematic diagram of information exchange in a communication control method according to an aspect of the present disclosure. As shown in FIG. 3, this aspect of the present disclosure mainly relates to the following network elements: a user terminal UE, a first base station BS 1, a control plane network element, a management system, a first forwarding plane network element, and a first service network element. Specific steps for performing the information exchange include S01 to S07.

S01. The user terminal sends a control request to the control plane network element through the first base station, where the control request may be an access request or a service request, the access request carries subscription information of the user terminal or service indication information, and the service request carries service indication information used to indicate a specific service that the user terminal accesses.

S02. After receiving the access request or the service request sent by the first base station, the control plane network element determines, based on the access request or the service request, the first service network element that the user terminal needs to access and an IP of the user terminal.

Optionally, in step S03, the control plane network element obtains an IP of the first service network element by performing signaling exchange with the management system. A specific process is as follows: The control plane network element sends an identification request to the management system, where the identification request carries a service type and may further carry current location information of the user terminal; and then the management system sends an identification response message carrying the IP of the first service network element and/or an IP of the first forwarding plane network element. When receiving the identification request, if the management system determines that no first forwarding plane network element and/or first service network element may provide a service for the user terminal, the management system deploys a first forwarding plane network element and/or a first service network element in proximity for the user terminal based on the current location information of the user terminal and/or the service type, and determine a corresponding IP. If the control request is a service request, the first forwarding plane network element has been determined. Therefore, the first forwarding plane network element may not be configured or redetermined.

Optionally, in step S04, if the first forwarding plane network element is not deployed or determined by the management system, the control plane network element may determine, based on the current location information of the user terminal, a first forwarding plane network element providing a forwarding service for the user terminal, and may also determine a corresponding IP of the first forwarding plane network element.

The control plane network element may determine the IP of the user terminal in two manners: 1. The control plane network element allocates the IP address to the terminal based on the received control request. 2. After the control plane network element determines the first forwarding plane network element serving the user terminal, the control plane network element sends an address obtaining request to the first forwarding plane network element, and the first forwarding plane network element sends an address obtaining response message carrying the IP of the user terminal to the control plane network element. The control plane network element determines the IP of the user terminal based on the received address obtaining response message.

S05. If the service packet forwarding tunnel is an IP in IP tunnel, the control plane network element sends a first session establishment request to the first service network element, where the first session establishment request carries the IP of the first forwarding plane network element; and the first service network element may receive the first session establishment request sent by the control plane network element to learn the IP of the first forwarding plane network element, and establish, through the control plane network element, the service packet forwarding tunnel between the first service network element and the first forwarding plane network element providing the forwarding service for the user terminal, to transmit a service packet of the user terminal. Optionally, the first service network element may send a first session response message to the control plane network element.

It should be noted that, the first session establishment request may further carry a service flow identifier, where the service flow identifier includes at least one of the following: the IP of the user terminal, a port number of the user terminal, an IP of the first server, or a port number of the first server. In this case, the service packet of the user terminal is specifically a service packet corresponding to the service flow identifier.

If the service packet forwarding tunnel between the first forwarding plane network element and the first service network element is a GTP tunnel, the control plane network element sends a first session establishment request to the first service network element, where the first session establishment request carries a TEID of the first forwarding plane network element, and the control plane network element receives a first session response message sent by the first forwarding plane network element, where the first session response message carries a TEID of the first service network element.

S06. The control plane network element sends a second session establishment request to the first forwarding plane network element, where the second session establishment request carries the IP of the first service network element, and may further carry the IP of the user terminal or the service flow identifier of the service packet of the user terminal. The first control plane network element may learn the IP of the first service network element by receiving the first session establishment request sent by the control plane network element, and may establish the service packet forwarding tunnel to the first service network element providing a service for the user terminal, to transmit the service packet of the user terminal.

If the second session establishment request further carries the service flow identifier, the first forwarding plane network element may forward, through the service packet forwarding tunnel, the service packet corresponding to the service flow identifier. The service flow identifier includes at least one of the following: the IP of the user terminal, the port number of the user terminal, the IP of the first server, or the port number of the first server.

Optionally, the first forwarding plane network element may send a second session response message to the control plane network element. If a tunnel between the first base station and the first forwarding plane network element is an IP in IP tunnel, the second session establishment request carries an IP of the first base station; if the tunnel between the first base station and the first forwarding plane network element is a GTP tunnel, the second session establishment request further carries a TEID of the first base station.

In this aspect of the present disclosure, in steps S05 and S06, the control plane network element performs signaling exchange with the first forwarding plane network element and the first service network element, and the service packet forwarding tunnel between the first forwarding plane network element and the first service network element is established by using the first session establishment request and the second session establishment request sent by the control plane network element.

When no GTP tunnel is used between the first forwarding plane network element and the first service network element, there may be no execution sequence between steps S05 and S06.

S07. The first base station and the user terminal perform signaling exchange to complete establishment of a tunnel between the first base station and the first forwarding plane network element and a radio resource configuration between the first base station and the user terminal, so that the user terminal can successfully access a network.

After the service packet forwarding tunnel is established successfully, the first service network element may receive, through the service packet forwarding tunnel, the service packet of the user terminal that is forwarded by the first forwarding plane network element, or may send the service packet of the user terminal through the service packet forwarding tunnel. The first forwarding plane network element may send the service packet of the user terminal through the service packet forwarding tunnel. For example, the IP in IP tunnel is used between the first forwarding plane network element and the first service network element. Specifically, the first forwarding plane network element receives an uplink service packet of the user terminal, where a source IP of the uplink service packet is the IP of the user terminal, and a destination IP of the uplink service packet is the IP of the first server. The first forwarding plane network element determines, based on an established correspondence between the service flow identifier and the service packet forwarding tunnel, and a service flow identifier of the uplink service packet, the service packet forwarding tunnel corresponding to the uplink service packet, performs IP in IP tunnel encapsulation on the uplink service packet, where a source IP of the encapsulated uplink service packet is the IP of the first forwarding plane network element, and a destination IP is the IP of the first service network element, and forwards the encapsulated uplink service packet. A process of processing, through the tunnel between the first forwarding plane network element and the first service network element, a downlink packet sent by the first server is similar to that of processing the uplink packet sent by the user terminal, and is not described herein.

As can be seen from above, in this aspect of the present disclosure, the control plane network element establishes the service packet forwarding path between the first service network element and the first forwarding plane network element to transmit the service packet of the user terminal, thereby providing an end-to-end service packet routing mechanism.

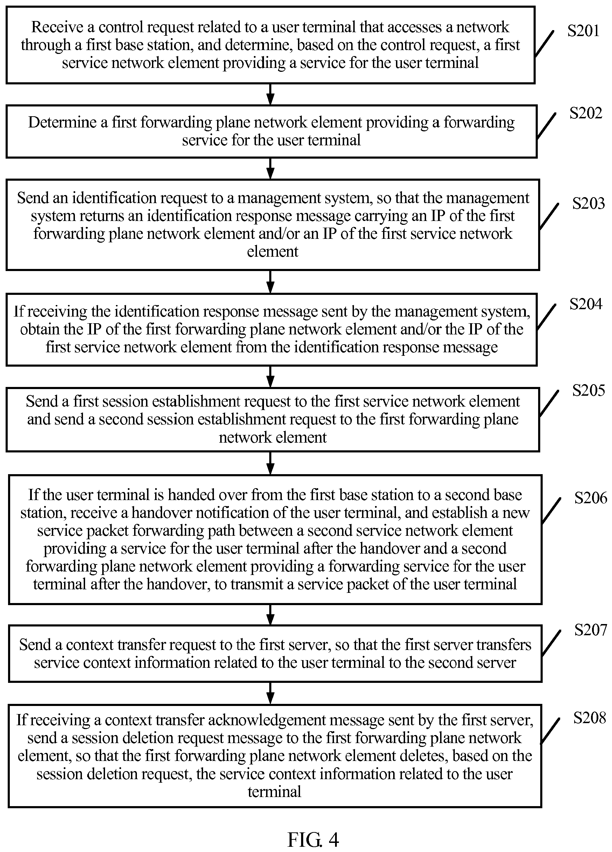

FIG. 4 is a schematic flowchart of another communication control method according to an aspect of the present disclosure. As shown in FIG. 4, the another communication control method provided by this aspect of the present disclosure may include steps S201 to S208.

S201. Receive a control request related to a user terminal that accesses a network through a first base station, and determine, based on the control request, a first service network element providing a service for the user terminal.

Specifically, a control plane network element receives the control request related to the user terminal that accesses the network through the first base station, and determines, based on the control request, the first service network element providing the service for the user terminal. The first service network element is a first server providing a service for the user terminal or a service access network element of a first server. The control request is an access request or a service request. In this aspect of the present disclosure, the user terminal may send, through a base station or a service function exposure platform, the control request related to the user terminal to the control plane network element, or send, based on a subscription data change of a home subscriber server, the control request related to the user terminal to the control plane network element. The control request may be an access request or a service request, where the access request may optionally carry service indication information of the terminal and current location information of the terminal, and the service request carries service indication information used to indicate a specific service that the user terminal accesses. After receiving the control request related to the user terminal that accesses the network through the first base station, the control plane network element may determine, based on the service indication information in the control request or the like, the first service network element providing the service for the user terminal. The first service network element includes a server providing a service for the user terminal or a service access network element of a server providing a service for the UE. In this aspect of the present disclosure, the control plane network element needs to complete establishment of a path between the first base station and the first forwarding plane network element and a path between the first forwarding plane network element and the first service network element.

S202. Determine a first forwarding plane network element providing a forwarding service for the user terminal.

Specifically, the control plane network element determines the first forwarding plane network element providing the forwarding service for the user terminal. In this aspect of the present disclosure, the control plane network element may determine, from a plurality of deployed forwarding plane network elements based on a current location of the user terminal, or a current location of a base station providing an access service for the terminal, and a service type, the first forwarding plane network element providing the forwarding service for the user terminal. The control plane network element may also send an identification request to a management system. When the management system determines that no first forwarding plane network element is suitable for providing a service for the user terminal, the management system deploys a first forwarding plane network element in proximity for the user terminal based on the current location information of the user terminal and the service type. The management system may further deploy a first forwarding plane network element in proximity for the user terminal based on current location information of the base station providing the access service for the user terminal and/or the service type.

S203. Send an identification request to a management system, so that the management system returns an identification response message carrying an IP of the first forwarding plane network element and/or an IP of the first service network element.

S204. If receiving the identification response message sent by the management system, obtain the IP of the first forwarding plane network element and/or the IP of the first service network element from the identification response message.

Specifically, the control plane network element sends the identification request to the management system, so that the management system returns the identification response message carrying the IP of the first forwarding plane network element and/or the IP of the first service network element. In this aspect of the present disclosure, the control plane network element sends the identification request to the management system, where the identification request includes the service type and location information. The management system may be a MANO, a MEC, or a service capability exposure platform. After receiving the identification request, the management system obtains the IP of the first forwarding plane network element and/or the IP of the first service network element based on the identifier information, and sends the identification response message carrying the IP of the first forwarding plane network element and/or the IP of the first service network element to the control plane network element. The control plane network element receives the identification response message sent by the management system, and obtains the IP of the first forwarding plane network element and/or the IP of the first service network element from the identification response message.

Optionally, the first forwarding plane network element and/or the first service network element are/is configured by the management system based on the identification request. If the management system determines that no first forwarding plane network element and/or first service network element may serve the user terminal, the management system deploys a first forwarding plane network element and/or a first service network element in proximity for the user terminal based on the current location information of the user terminal and the service type, and may also allocate an IP to the first forwarding plane network element and/or the first service network element during the deployment.

Further optionally, the control request carries the current location information of the user terminal. The first forwarding plane network element and/or the first service network element are/is determined based on the current location information of the user terminal and preconfiguration information, and the IP of the first forwarding plane network element and/or the IP of the first service network element are/is obtained. The control request received by the control plane network element carries the current location information of the user. Related information of the first forwarding plane network element and/or the first service network element is configured based on the current location information of the user terminal and a presetting of the control plane network element, and the IP of the first forwarding plane network element and/or the IP of the first service network element are/is determined.

S205. Send a first session establishment request to the first service network element and send a second session establishment request to the first forwarding plane network element.

Specifically, the control plane network element sends the first session establishment request to the first service network element and sends the second session establishment request to the first forwarding plane network element, so that the first service network element obtains the IP of the first forwarding plane network element and that the first forwarding plane network element obtains the IP of the first service network element. In this aspect of the present disclosure, the tunnel is used to transmit a service packet of the user terminal, the first session establishment request carries the IP of the first forwarding plane network element, the second session establishment request carries the IP of the first service network element, and the IP of the first service network element is an access IP of the first server or an IP of the first service access network element. The control plane network element exchanges signaling with the first forwarding plane network element and the first service network element to implement a service packet forwarding tunnel between the first forwarding plane network element and the first service network element. The first session establishment request is sent to the first service network element and the second session establishment request is sent to the first forwarding plane network element providing the forwarding service for the user terminal, so that the first service network element and the forwarding plane network element learn IPs of each other to establish an IP in IP tunnel.

Because the tunnel may be a GTP tunnel or a GRE tunnel in addition to an IP in IP tunnel, when the tunnel is a GTP tunnel, a process of establishing the tunnel between the first service network element and the first forwarding plane network element is as follows: The control plane network element sends a first session establishment request to the first service network element, where the first session establishment request carries the IP of the first forwarding plane network element and a tunnel endpoint identifier (Tunnel Endpoint Identifier, TEID) of the first forwarding plane network element; and the first service network element sends a first session response message to the control plane network element, where the first session response message carries an endpoint identifier of the first service network element; and the control plane network element sends the second session establishment request to the first forwarding plane network element, where the second session response message carries the IP and a tunnel endpoint identifier TEID of the first service network element.

It should be noted that, in this aspect and subsequent aspects, for example, a forwarding path between the service network element and the forwarding plane network element is a forwarding tunnel. Optionally, the forwarding path between the service network element and the forwarding plane network element may be further implemented in other manners such as a forwarding policy corresponding to a service flow identifier, for example, a multi-hop forwarding manner based on the forwarding policy or a service chaining manner.

It should be noted that, when an SDN solution is used between the first forwarding plane network element and the control plane network element, the establishing a service packet forwarding tunnel between the first service network element and the first forwarding plane network element providing the forwarding service for the user terminal may be replaced with the following description: The control plane network element establishes a service packet forwarding path between the first service network element and the first forwarding plane network element providing the forwarding service for the user terminal, to transmit the service packet of the user terminal. Specifically, the control plane network element delivers, to the first forwarding plane network element, the forwarding policy corresponding to the service flow identifier, where the forwarding policy is used to establish the service packet forwarding path between the first forwarding plane network element and the first service network element, and the forwarding policy corresponding to the service flow identifier may be delivered in a form of a flow table in the OpenFlow protocol, and the control plane network element delivers a first session establishment request to the first service network element, where the first session establishment request carries the IP of the first forwarding plane network element.

Optionally, the second session establishment request and/or the first session establishment request further carry/carries the service flow identifier, so that the first forwarding plane network element forwards, through the service packet forwarding tunnel, the service packet corresponding to the service flow identifier, where the service flow identifier is an IP of the user terminal in the service packet, a port number of the user terminal, an IP of the server, or a port number of the server.

S206. If the user terminal is handed over from the first base station to a second base station, receive a handover notification of the user terminal, and establish a new service packet forwarding path between a second service network element providing a service for the user terminal after the handover and a second forwarding plane network element providing a forwarding service for the user terminal after the handover, to transmit a service packet of the user terminal.

Specifically, if the user terminal is handed over from the first base station to the second base station, the control plane network element receives the handover notification of the user terminal, and establishes the new service packet forwarding path between the second service network element providing the service for the user terminal after the handover and the second forwarding plane network element providing the forwarding service for the user terminal after the handover, to transmit the service packet of the user terminal, where the second service network element is a second server or a service access network element of a second server. In this aspect of the present disclosure, the user terminal is moving. When the user terminal moves from one place to another place, the first base station to which the user terminal is communicatively connected receives a measurement report periodically sent by the user terminal, determines, based on the measurement report, whether a handover needs to be performed, and determines the second base station. The first base station sends a handover request to the second base station, so that the second base station feeds back a handover acknowledgement message to the first base station and sends a handover notification to the control plane network element. The control plane network element receives the handover notification of the user terminal, and establishes the new service packet forwarding path between the second service network element providing the service for the user terminal after the handover and the second forwarding plane network element providing the forwarding service for the user terminal after the handover, to transmit the service packet of the user terminal. A process and a principle of establishing the new service packet forwarding path are the same as those of establishing the initial service packet forwarding path. A forwarding tunnel corresponding to a service flow identifier is used as an example for description. A specific process is as follows: If the management system exists in a network architecture, the control plane network element sends a handover notification message to the management system; the management system determines, based on the handover notification message, whether the second service network element and/or the second forwarding plane network element suitable for serving the user terminal exist/exists in the network architecture; and if one or two of the network elements such as the second service network element do not exist, the management system may deploy the second service network element in proximity based on the current location information of the user terminal. Alternatively, the control plane network element determines the second service network element and/or the second forwarding plane network element based on the current location information of the user terminal and the preconfiguration information; and then the control plane network element sends a first session request to the second service network element, where the first session request carries an IP of the second forwarding plane network element, and the control plane network element sends the second session request to the second forwarding plane network element, where the second session request carries an IP of the second service network element, so that the second forwarding plane network element and the second service network element learn IPs of each other to establish the new service packet forwarding tunnel.

Optionally, during the handover from the first base station to the second base station, if the service network element sends a downlink packet to the first base station through the first forwarding plane network element, the first base station may forward the downlink packet to the second base station for buffering. After completion of the handover, that is, after a communication connection is established between the second base station and the user terminal, the second base station sends the buffered downlink packet to the user terminal.

Optionally, after the handover from the first base station to the second base station and during establishment of the new service packet forwarding path, that is, the service packet forwarding path between the second forwarding plane network element and the second service network element, if the user terminal sends an uplink packet to the second base station, to avoid a packet loss, the second base station may buffer the uplink packet and does not send the uplink packet to the second service network element until the new service packet forwarding path is established.

S207. Send a context transfer request to the first server, so that the first server transfers service context information related to the user terminal to the second server.

Specifically, the control plane network element sends the context transfer request to the first server, so that the first server transfers the service context information related to the user terminal to the second server. In this aspect of the present disclosure, the handover process includes the handover between the base stations and path establishment, and further includes context transfer between the servers. When the user terminal is handed over from the first base station to the second base station, the control plane network element sends the context transfer request to the first server based on the received handover notification, so that the first server transfers the service context information related to the user terminal to the second server. The context transfer request carries an IP of the second server, and may further carry another service flow identifier in addition to the IP of the second server. In a manner of context transfer by the first server for the user terminal, a service context of the user may be transmitted to the second server by using a protocol such as Media Independent Handover (Media Independent Handover, MIH) or Restful.

Optionally, the control plane network element sends the context transfer request to the first server through the management system. The first server transfers the service context information related to the user terminal to the second server based on the context transfer request.

Optionally, step S207 may be replaced with a manner such as virtual machine migration or Docker migration to migrate the whole first server to a server deployed in a target location. This manner is suitable for a scenario in which the first server serves only a single user or a single user group that is handed over, and the control plane network element may initiate a request to the management system, where the request carries an indication of a new deployment location, so that the management system migrates the first server to the new location in a manner of a virtual machine or a Docker.

S208. If receiving a context transfer acknowledgement message sent by the first server, send a session deletion request message to the first forwarding plane network element, so that the first forwarding plane network element deletes, based on the session deletion request, the service context information related to the user terminal.

Optionally, the control plane network element receives the context transfer acknowledgement message sent by the first server through the management system. Specifically, the first server sends the context transfer acknowledgement message to the management system, and the management system forwards the context transfer acknowledgement message to the control plane network element.

Specifically, if receiving the context transfer acknowledgement message sent by the first server or forwarded by the management system, the control plane network element sends the session deletion request message to the first forwarding plane network element, so that the first forwarding plane network element deletes, based on the session deletion request, the service context information related to the user terminal. In this aspect of the present disclosure, after completing the context transfer, the first server sends the context transfer acknowledgement message to the control plane network element; if the control plane network element receives the context transfer acknowledgement message sent by the first server, the control plane network element sends the session deletion request message to the first forwarding plane network element; and after receiving the session deletion request message, the first forwarding plane network element deletes the service context information related to the user terminal, such as a bearer context, and sends a session deletion response message to the control plane network element. The context transfer acknowledgement message in the foregoing process may be forwarded by the management system. Optionally, after the second base station receives an end packet message sent by the first base station, the second base station sends a resource release message to the first base station, where the packet message may be an end marker data packet, used to indicate that the packet is a last packet message sent by the first base station to the second base station. The resource release message is used to trigger the first base station to release resources related to the user terminal, such as a radio bearer context. In this aspect of the present disclosure, step S206 and step S207 may be interchanged or performed in parallel.

Optionally, when the SDN solution is used between the first forwarding plane network element and the control plane network element, the session deletion request may be delivered in the form of a flow table in the OpenFlow protocol to remove the forwarding path between the first forwarding plane network element and the first service network element on the first forwarding plane network element.

As can be seen from above, in this aspect of the present disclosure, the control plane network element establishes the new service packet forwarding path between the second service network element after the handover and the second forwarding plane network element after the handover, to transmit the service packet of the user terminal. This ensures continuity of an IP session in a moving process of the user terminal, overcomes a disadvantage that a communications link of the user terminal is relatively long after the moving, and reduces a communication latency. The control plane network element sends the context transfer request to the first server to transfer the service context information, thereby ensuring that the handover is lossless.

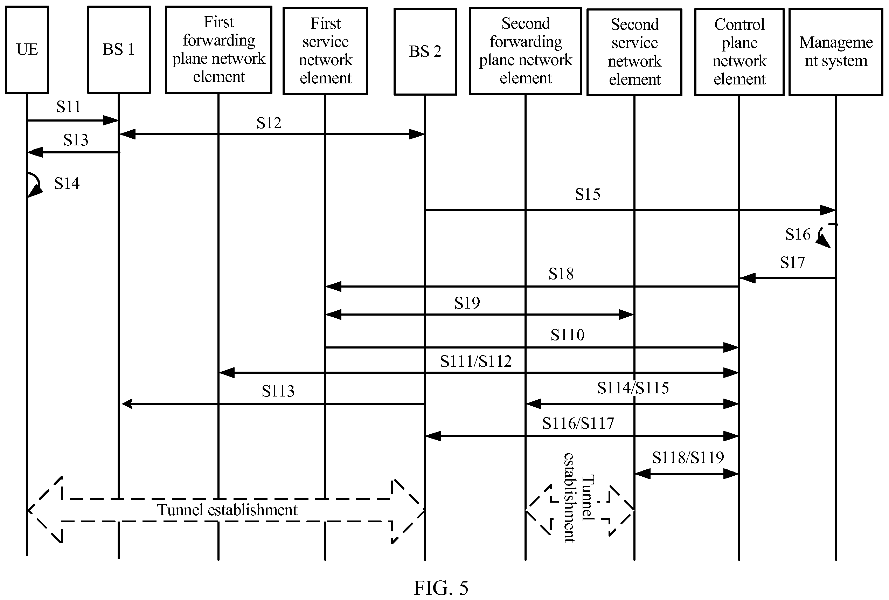

FIG. 5 is a schematic diagram of information exchange in another communication control method according to an aspect of the present disclosure. As shown in FIG. 5, this aspect of the present disclosure mainly relates to the following network elements: a user terminal UE, a first base station BS 1, a control plane network element, a management system, a first forwarding plane network element, a first service network element, a second forwarding plane network element, a second service network element, and a second base station BS 2. Specific steps for performing the information exchange include S11 to S111. S11 to S14 are a process of a handover from the first base station to the second base station; S15 to S17 are a process of obtaining, by the control plane network element, an IP of the second forwarding plane network element and/or an IP of the second service network element; S18 to S113 are a process of context transfer by the server and releasing of resources related to the user terminal; and S114 to S119 are mainly a process of establishing a service packet forwarding path between the second base station and the second forwarding plane network element and a service packet forwarding path between the second service network element and the second forwarding plane network element. It should be noted that, for example, a granularity of the service packet forwarding path in this aspect is per user in this aspect.

S11. The user terminal sends a handover measurement report to the first base station, and the first base station determines the second base station based on the measurement report.

S12. The first base station sends a handover request to the second base station, so that the second base station sends a handover acknowledge message to the first base station.

S13. The first base station sends a radio resource configuration message to the user terminal.

S14. The user terminal breaks a connection between the user terminal and the first base station, and establishes a connection to the second base station.

S15. The second base station sends a handover notification message to the management system through the control plane network element, where the handover notification message may carry current location information of the user terminal.

Optionally, in step S16, after receiving the handover notification message, if the management system determines that no second forwarding plane network element and/or second service network element may provide a service for the user terminal, the management system deploys a second forwarding plane network element and/or a second service network element in proximity for the user terminal based on a current location of the user terminal. The second forwarding plane network element may be the same as or different from the first forwarding plane network element. The second service network element may be the same as or different from the first service network element.

S17. The management system sends a handover notification response message to the control plane network element, where the handover notification response message carries an IP of the second forwarding plane network element and/or an IP of the second service network element.

It should be noted that, S15 may occur after S12, and steps S15 to S17 may be performed in parallel with steps S13 and S14.

S18. The control plane network element sends a context transfer request to the first server, where the context transfer request carries an IP of the second server and an IP of the user terminal.

S19. After receiving the context transfer request, the first server stops processing a service of the user terminal, and performs information exchange with the second server to transfer a service context from the first server to the second server.

In the foregoing steps S18 and S19, the service context on the first server may be transferred to the second server by using a protocol such as Media Independent Handover (Media Independent Handover, MIH) or Restful; or the service context on the first server may be transferred in another manner. To be specific, the whole first server is migrated to a location of a newly deployed server in a manner of virtual machine migration or Docker migration.

S110. After transferring the service context on the first server, the first server sends a context transfer acknowledgement message to the control plane network element.

S111. After receiving the context transfer acknowledgement message, the control plane network element sends a session deletion request to the first forwarding plane network element.

S112. The first forwarding plane network element receives the session deletion request, deletes service context information related to the user terminal such as a bearer context, and sends a session deletion response message to the control plane network element.

S113. If the second base station receives an end packet of the first base station, the second base station sends a resource release message to the first base station, where the end packet may be an end marker packet, the end packet indicates that the packet is a last packet sent by the first base station to the second base station, and the resource release message is used to trigger the first base station to release resources related to the user terminal, for example, a radio bearer context.

In this aspect, it is assumed that the path between the second base station and the second forwarding plane network element and the path between the second forwarding plane network element and the second service network element are IP in IP tunnels. In addition, it is assumed that a granularity of the tunnel between the forwarding plane network element and the service network element is per user.

S114. The control plane network element sends a second session establishment request to the second forwarding plane network element, where the session establishment request carries the IP of the user terminal, an IP of the second base station, and the IP of the second service server. The second forwarding plane network element may obtain the IP of the user terminal, the IP of the second base station, and the IP of the second service server by receiving the second session establishment request. The second forwarding plane network element establishes, through the control plane network element, a service packet forwarding tunnel to the second forwarding plane network element providing a forwarding service for the user terminal, to transmit a service packet of the user terminal.

Optionally, in step S115, the second forwarding plane network element sends a second session response message to the control plane network element.

S116. The control plane network element sends a third session establishment request to the second base station, where the third session establishment request carries the IP of the second forwarding plane network element. The third session establishment request may further carry the IP of the user terminal.

Optionally, in step S117, the second base station sends a third session response message to the control plane network element.

S118. The control plane network element sends a first session establishment request to the second service network element, where the first session establishment request carries the IP of the second forwarding plane network element. The second forwarding plane network element may obtain the IP of the second forwarding plane network element by receiving the second session establishment request. The second forwarding plane network element may establish the service packet forwarding tunnel between the second forwarding plane network element and the second service network element providing a service for the user terminal, to transmit the service packet of the user terminal.

The first session establishment request may further carry the IP of the user terminal.

Optionally, in step S119, the second service network element sends a first session response message to the control plane network element.

It should be noted that, in this aspect, S114 may occur after S110, and steps Sill to S113 may be performed in parallel with S114 to S119. In addition, the foregoing step S114, step S116, and step S118 may be performed in a random sequence, or may be performed in parallel. Steps 114 to S119 in this aspect of the present disclosure are also applicable to establishment of an IP in IP tunnel between the first base station and the first forwarding plane network element and an IP in IP tunnel between the first forwarding plane network element and the first service network element.

When the tunnels between the second base station and the second forwarding plane network element and between the second forwarding plane network element and the second service network element are both GTP tunnels, using a scenario in which control and forwarding are separated on a gateway as an example for description in this aspect, steps S114 to S119 should be changed into the following descriptions:
S114. The control plane network element sends a first session establishment request to the second service network element, where the first session establishment request carries the IP of the second forwarding plane network element and a TEID of the second forwarding plane network element.
S115. The second service network element sends a first session response message to the control plane network element, where the first session response message carries a TEID of the second service network element.

The first session response message may further carry the IP of the second service network element.

S116. The control plane network element sends a third session establishment request to the second base station, where the third session establishment request carries the IP of the second forwarding plane network element and the TEID of the second forwarding plane network element.

S117. The second base station sends a third session response message to the control plane network element, where the third session response message carries a TEID of the second base station.

The third session response message may further carry the IP of the second base station.

The first session establishment request in step S114 and the third session establishment request in step S116 may further carry the IP of the user terminal.

S118. The control plane network element sends a second session establishment request to the second forwarding plane network element, where the session establishment request carries the IP of the user terminal, the IP of the second base station, the TEID of the second base station, the IP of the second service server, and the TEID of the second service network element.

Optionally, in step S119, the second forwarding plane network element sends a second session response message to the control plane network element.

In another implementation, when step S116 is performed after step S118, that is, when an execution sequence is step S114, step S118, and step S116, step S118 needs to be modified and two steps are added after step S116. A modified process is specifically as follows: In step S118, the second session establishment request carries the IP of the user terminal, the IP of the second service server, and the TEID of the second service network element; in step S119, the control plane network element sends a session modification request to the second forwarding plane network element, where the session modification request carries the IP of the user terminal, the IP of the second base station, and the TEID of the second base station; and optionally, the second forwarding plane network element sends a session modification response to the control plane network element.

It should be noted that, in this aspect, when control and forwarding on the second base station are also separated, the TEID of the second base station may not be carried in step S117; and step S116 and step S118 may be performed in a random sequence and may be performed simultaneously. Steps 114 to S119 in this aspect of the present disclosure are also applicable to establishment of a GTP tunnel between the first base station and the first forwarding plane network element and a GTP tunnel between the first forwarding plane network element and the first service network element.

The manners provided by this aspect for establishing a tunnel between the base station and the forwarding plane network element and a tunnel between the forwarding plane network element and the service network element are merely two implementations, and this aspect is not limited to the two implementations. The manners may also be a combination of the IP in IP tunnel and the GTP tunnel, or the IP in IP tunnel and/or another tunnel, or the GTP tunnel and/or another tunnel, or the like.

As can be seen from above, in this aspect of the present disclosure, the control plane network element establishes the new service packet forwarding path between the second service network element after the handover and the second forwarding plane network element after the handover, to transmit the service packet of the user terminal. This ensures continuity of an IP session in a moving process of the user terminal, overcomes a disadvantage that a communications link of the user terminal is relatively long after the moving, and reduces a communication latency. The first server transfers the service context information to ensure that the context information is lossless during the handover.

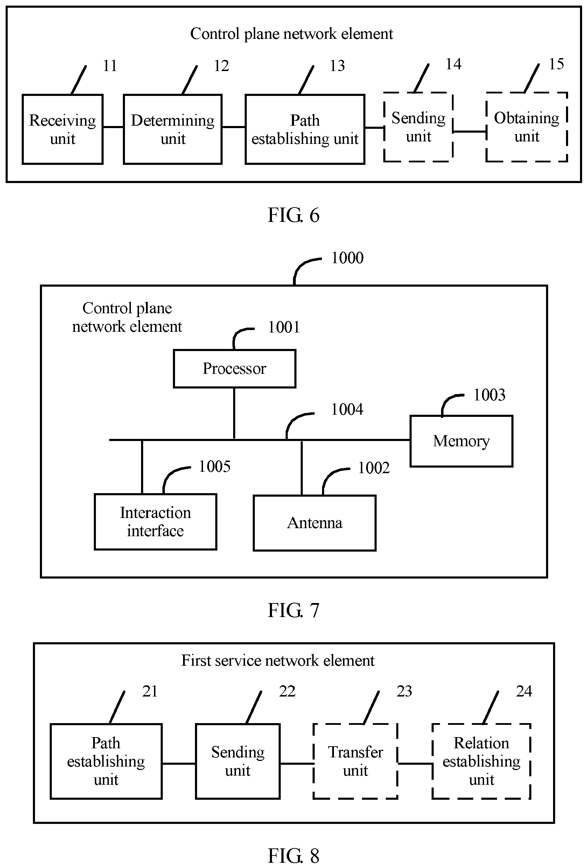

FIG. 6 is a schematic modular diagram of a control plane network element according to an aspect of the present disclosure. As shown in FIG. 6, the control plane network element may include a receiving unit 11, a determining unit 12, and a path establishing unit 13.

The receiving unit 11 is configured to receive a control request related to a user terminal that accesses a network through a first base station.

Specifically, the receiving unit 11 receives the control request related to the user terminal that accesses the network through the first base station. In this aspect of the present disclosure, the user terminal may send, through a base station or a service function exposure platform, the control request related to the user terminal to the control plane network element, or send, based on a subscription data change of a home subscriber server, the control request related to the user terminal to the control plane network element. The control request may be an access request or a service request, where the access request carries service indication information of the terminal and current location information of the terminal, and the service request carries service indication information used to indicate a specific service that the user terminal accesses.

The determining unit 12 is configured to determine, based on the control request, a first service network element providing a service for the user terminal.

After the receiving unit 11 receives the control request related to the user terminal that accesses the network through the first base station, the determining unit 12 may determine, based on the service indication information in the control request or the like, the first service network element providing the service for the user terminal. The first service network element may be a first server providing a service for the user terminal or a service access network element of a first server providing a service for the user terminal. In this aspect of the present disclosure, the control plane network element needs to complete establishment of a path between the first base station and the first forwarding plane network element and a path between the first forwarding plane network element and the first service network element.

The determining unit 12 is further configured to determine the first forwarding plane network element providing a forwarding service for the user terminal.

Specifically, the determining unit 12 determines the first forwarding plane network element providing the forwarding service for the user terminal. In this aspect of the present disclosure, the determining unit 12 may determine, from a plurality of deployed forwarding plane network elements based on a current location of the user terminal, or a current location of a base station providing an access service for the terminal, and a service type, the first forwarding plane network element providing the forwarding service for the user terminal. The determining unit 12 may also send an identification request to a management system. When the management system determines that no first forwarding plane network element is suitable for providing a service for the user terminal, the management system deploys a first forwarding plane network element in proximity for the user terminal based on the current location information of the user terminal and/or the service type. The management system may further deploy a first forwarding plane network element in proximity for the user terminal based on current location information of the base station providing the access service for the user terminal and/or the service type.

The path establishing unit 13 is configured to establish a service packet forwarding path between the first service network element and the first forwarding plane network element to transmit a service packet of the user terminal.

Specifically, the path establishing unit 13 establishes the service packet forwarding path between the first service network element and the first forwarding plane network element to transmit the service packet of the user terminal. In this aspect of the present disclosure, the path establishing unit 13 may establish, by exchanging signaling with the forwarding plane network element and the service network element, the service packet forwarding path between the first service network element and the first forwarding plane network element providing the forwarding service for the user terminal, to transmit the service packet of the user terminal. The service packet forwarding path may include a forwarding tunnel corresponding to a service flow identifier or a forwarding policy corresponding to a service flow identifier.

Optionally, the path establishing unit 13 is configured to:
send a first session establishment request to the first service network element, where the first session establishment request carries an IP of the first forwarding plane network element; and
send a second session establishment request to the first forwarding plane network element, where the second session establishment request carries an IP of the first service network element.

When the service packet forwarding path is the forwarding tunnel corresponding to the service flow identifier, a process of establishing the forwarding tunnel is as follows: The path establishing unit 13 sends the first session establishment request to the first service network element, where the first session establishment request carries the IP of the first forwarding plane network element, and sends the second session request to the first forwarding plane network element, where the second session request carries the IP of the first service network element, so that the first forwarding plane network element and the first service network element learn IPs of each other, and therefore establish an IP in IP tunnel. The IP of the service network element is used to identify a tunnel endpoint at the service network element end of the IP in IP tunnel between the first forwarding plane network element and the service network element. Optionally, the first session establishment request further carries the service flow identifier. Optionally, the second session establishment request further carries the service flow identifier. The service flow identifier is at least one of an IP of the user terminal, a port number of the user terminal, an IP of the server, or a port number of the server.

Because the tunnel may be a GTP tunnel or a GRE tunnel in addition to an IP in IP tunnel, when the tunnel is a GTP tunnel, a process of establishing the tunnel between the first service network element and the first forwarding plane network element is as follows: The path establishing unit 13 sends the first session establishment request to the first service network element, where the first session establishment request carries the IP of the first forwarding plane network element and a TEID of the first forwarding plane network element; and the first service network element sends a first session response message to the control plane network element, where the first session response message carries an endpoint identifier of the first service network element; and the path establishing unit 13 sends the second session establishment request to the first forwarding plane network element, where the second session response message carries the IP of the first service network element and a tunnel endpoint identifier TEID of the first service network element.

Optionally, the path establishing unit 13 is specifically configured to:
deliver, to the first service network element, the forwarding policy carrying the service flow identifier, so that the first service network element forwards, based on the forwarding policy, the service packet corresponding to the service flow identifier; and/or
deliver, to the first forwarding plane network element, the forwarding policy carrying the service flow identifier, so that the first forwarding plane network element forwards, based on the forwarding policy, the service packet corresponding to the service flow identifier.

Specifically, the forwarding path between the first service network element and the first forwarding plane network element may be further implemented in other manners such as the forwarding policy corresponding to the service flow identifier, for example, a multi-hop forwarding manner based on the forwarding policy or a service chaining manner. When the forwarding path between the first service network element and the first forwarding plane network element is implemented by the forwarding policy corresponding to the service flow identifier, a process of establishing the forwarding path between the first service network element and the first forwarding plane network element is as follows: The path establishing unit 13 may deliver, to the first forwarding plane network element, the forwarding policy carrying the service flow identifier, so that the first service network element forwards, based on the forwarding policy, the service packet corresponding to the service flow identifier; the path establishing unit 13 may deliver, to the first service network element, the forwarding policy carrying the service flow identifier, so that the first forwarding plane network element can forward, based on the forwarding policy, the service packet corresponding to the service flow identifier; or the path establishing unit 13 may further deliver the forwarding policy to each forwarding node between the first forwarding plane network element and the first service network element, so that each forwarding node can forward, based on the forwarding policy, the service packet corresponding to the service flow identifier. The path establishing unit 13 may perform at least one of the foregoing forwarding path establishment processes, and the forwarding policies sent to the first service network element, the second forwarding plane network element, and each forwarding node may be the same or may be different.

Optionally, the control plane or a forwarding policy controller may configure the forwarding policy on the first forwarding plane network element and/or the first service network element in a preconfiguration manner. Further optionally, the forwarding policy is configured on each forwarding node between the first forwarding plane network element and the first service network element in a preconfiguration manner. The forwarding policy may include the following information: the service flow identifier and a packet forwarding action. The service flow identifier includes at least one of the following: the IP of the user terminal, the IP of the server, the port number of the user terminal, or the port number of the server. The packet forwarding action is forwarding the packet through a specific port or a specific link.

When an SDN solution is used for service packet transmission between the first forwarding plane network element and the first service network element, the path establishing unit 13 is configured to establish the service packet forwarding path between the first service network element and the first forwarding plane network element providing the forwarding service for the user terminal, to transmit the service packet of the user terminal. Specifically, the control plane network element delivers, to the first forwarding plane network element, the forwarding policy corresponding to the service flow identifier, where the forwarding policy is used to establish the service packet forwarding path between the first forwarding plane network element and the first service network element, and the forwarding policy corresponding to the service flow identifier may be sent in a form of a flow table in the OpenFlow protocol, and the control plane network element delivers the first session establishment request to the first service network element, where the first session establishment request carries the IP of the first forwarding plane network element.

Optionally, the control plane network element further includes a sending unit 14 and an obtaining unit 15.

The sending unit 14 is configured to send an identification request to the management system, so that the management system returns an identification response message carrying the IP of the first forwarding plane network element or that the management system returns an identification response message carrying the IP of the first service network element.

If the identification response message sent by the management system is received, the obtaining unit 15 is configured to obtain the IP of the first forwarding plane network element from the identification response message, or obtain the IP of the first service network element from the identification response message.

Optionally, the sending unit sends an identification request to the management system, where the identification request carries the service type, or carries the current location information of the user terminal and the service type, and the service type is determined based on the control request message or determined by the control plane network element based on subscription information of the terminal. The management system may be a MANO system, a MEC system, or a service capability exposure platform. The management system sends an identification response message carrying the IP of the first service network element and/or the IP of the first forwarding plane network element to the control plane network element. When receiving the identification request, if the management system determines that no first forwarding plane network element and/or first service network element are/is suitable for providing a service for the user terminal, the management system deploys a first forwarding plane network element and/or a first service network element in proximity for the user terminal based on the current location information of the user terminal and the service type.

Optionally, the control request may carry the current location information of the user terminal. The determining unit may determine the first service network element based on the current location information of the user terminal and preconfiguration information, and obtain the IP of the first service network element; or the determining unit may determine the first forwarding plane network element based on the current location information of the user terminal and preconfiguration information, and obtain the IP of the first forwarding plane network element.

The receiving unit 11 is further configured to receive a handover notification of the user terminal if the user terminal is handed over from the first base station to a second base station.

The path establishing unit 13 is further configured to establish, based on the handover notification, a new service packet forwarding path between the second service network element and the second forwarding plane network element to transmit a service packet of the user terminal, where the second service network element is a second server or a service access network element of a second server.

Specifically, if the user terminal is handed over from the first base station to the second base station, the receiving unit 11 receives the handover notification of the user terminal, and the path establishing unit 13 establishes the new service packet forwarding path between the second service network element providing a service for the user terminal after the handover and the second forwarding plane network element providing a forwarding service for the user terminal after the handover, to transmit the service packet of the user terminal, where the second service network element is the second server or the service access network element of the second server. In this aspect of the present disclosure, the user terminal is moving. When the user terminal moves from one place to another place, the first base station to which the user terminal is communicatively connected receives a measurement report periodically sent by the user terminal, determines, based on the measurement report, whether a handover needs to be performed, and determines the second base station. The first base station sends a handover request to the second base station, so that the second base station feeds back a handover acknowledgement message to the first base station and sends a handover notification to the control plane network element. The control plane network element receives the handover notification of the user terminal, and establishes the new service packet forwarding path between the second service network element providing the service for the user terminal after the handover and the second forwarding plane network element providing the forwarding service for the user terminal after the handover, to transmit the service packet of the user terminal. A process and a principle of establishing the new service packet forwarding path are the same as those of establishing the initial service packet forwarding path. A forwarding tunnel corresponding to a service flow identifier is used as an example for description. A specific process is as follows: If the management system exists in a network architecture, the control plane network element sends a handover notification message to the management system; the management system determines, based on the handover notification message, whether the second service network element and/or the second forwarding plane network element suitable for serving the user terminal exist/exists in the network architecture; and if one or two of the network elements such as the second service network element do not exist, the management system may deploy the second service network element in proximity based on the current location information of the user terminal. Alternatively, the control plane network element determines the second service network element and/or the second forwarding plane network element based on the current location information of the user terminal and the preconfiguration information; and then the control plane network element sends a first session request to the second service network element, where the first session request carries an IP of the second forwarding plane network element, and the control plane network element sends the second session request to the second forwarding plane network element, where the second session request carries an IP of the second service network element, so that the second forwarding plane network element and the second service network element learn IPs of each other to establish the new service packet forwarding tunnel.

Optionally, during the handover from the first base station to the second base station, if the service network element sends a downlink packet to the first base station through the first forwarding plane network element, the first base station may forward the downlink packet to the second base station for buffering. After completion of the handover, that is, after a communication connection is established between the second base station and the user terminal, the second base station sends the buffered downlink packet to the user terminal.

Optionally, after the handover from the first base station to the second base station and during establishment of the new service packet forwarding path, that is, the service packet forwarding path between the second forwarding plane network element and the second service network element, if the user terminal sends an uplink packet to the second base station, to avoid a packet loss, the second base station may buffer the uplink packet and does not send the uplink packet to the second service network element until the new service packet forwarding path is established.

The sending unit 14 is further configured to send a context transfer request to the first server, so that the first server transfers service context information related to the user terminal to the second server; or send a context transfer request to the first server through the management system, so that the first server transfers service context information related to the user terminal to the second server.

Specifically, the handover process includes the handover between the base stations and path establishment, and further includes context transfer between the servers. When the user terminal is handed over from the first base station to the second base station, the sending unit 14 sends the context transfer request to the first server based on the received handover notification, so that the first server transfers the service context information related to the user terminal to the second server. The context transfer request carries an IP of the second server, and may further carry another service flow identifier in addition to the IP of the second server. In a manner of context transfer by the first server for the user terminal, a service context of the user may be transmitted to the second server by using a protocol such as MIH or Restful.

Optionally, the sending unit 14 may be replaced with a manner such as virtual machine migration or Docker migration to migrate the whole first server to a server deployed in a target location. This manner is suitable for a scenario in which the first server serves only a single user or a single user group that is handed over, and the sending unit 14 may initiate a request to the management system, where the request carries an indication of a new deployment location, so that the management system migrates the first server to the new location in a manner of a virtual machine or a Docker.

Optionally, the sending unit 14 is further configured to: if a context transfer acknowledgement message sent by the first server is received, send a session deletion request message to the first forwarding plane network element, so that the first forwarding plane network element deletes, based on the session deletion request, the service context information related to the user terminal.

Specifically, after the first server completes the context transfer, and the context transfer acknowledgement message sent by the first server is received, the sending unit 14 sends the session deletion request message to the first forwarding plane network element. The first forwarding plane network element deletes, based on the session deletion request message, the service context information related to the user terminal, such as a bearer context, and sends a session deletion response message to the control plane network element. The context transfer acknowledgement message in the foregoing process may be forwarded by the management system. Optionally, after the second base station receives an end packet message sent by the first base station, the second base station sends a resource release message to the first base station, where the packet message may be an end marker data packet, used to indicate that the packet is a last packet message sent by the first base station to the second base station. The resource release message is used to trigger the first base station to release resources related to the user terminal, such as a radio bearer context.

Optionally, when the SDN solution is used between the first forwarding plane network element and the control plane network element, the session deletion request may be delivered in the form of a flow table in the OpenFlow protocol to remove the forwarding path between the first forwarding plane network element and the first service network element on the first forwarding plane network element.

As can be seen from above, in this aspect of the present disclosure, the control plane network element establishes the new service packet forwarding path between the second service network element after the handover and the second forwarding plane network element after the handover, to transmit the service packet of the user terminal. This ensures continuity of an IP session in a moving process of the user terminal, overcomes a disadvantage that a communications link of the user terminal is relatively long after the moving, and reduces a communication latency. The control plane network element sends the context transfer request to the first server to transfer the service context information, thereby ensuring that the handover is lossless.

FIG. 7 depicts a control plane network element in an aspect of the present disclosure. FIG. 7 is a schematic structural diagram of a control plane network element 1000 according to an aspect of the present disclosure. As shown in FIG. 7, the control plane network element may include at least one processor 1001, for example, a CPU, at least one antenna 1002, a memory 1003, at least one communications bus 1004, and an interaction interface 1005. The communications bus 1004 is configured to implement connection and communication between the components. The antenna 1002 may be configured to send and receive information and data. The memory 1003 may include a high-speed RAM memory, or may further include a non-volatile memory (non-volatile memory), for example, at least one disk storage. The memory 1003 may optionally include at least one memory of the user terminal far away from the processor 1001. In some implementations, the interaction interface 1005 may be configured to input and output information, and may include a display and a keyboard.

Specifically, the processor 1001 is configured to invoke a program stored in the memory 1003 to perform the following operations:
receiving a control request related to a user terminal that accesses a network through a first base station, and determining, based on the control request, a first service network element providing a service for the user terminal;
determining, by the control plane network element, a first forwarding plane network element providing a forwarding service for the user terminal; and
establishing, by the control plane network element, a service packet forwarding path between the first service network element and the first forwarding plane network element to transmit a service packet of the user terminal.

In an aspect, the first service network element is a first server providing a service for the user terminal or a service access network element of a first server.

In an aspect, the control request is an access request or a service request.

In an aspect, the service packet forwarding path includes a forwarding tunnel corresponding to a service flow identifier or a forwarding policy corresponding to a service flow identifier.

In an aspect, the processor 1001 is configured to invoke the program stored in the memory 1003 to specifically perform:
sending, by the control plane network element, a first session establishment request to the first service network element, where the first session establishment request carries an IP of the first forwarding plane network element; and
sending, by the control plane network element, a second session establishment request to the first forwarding plane network element, where the second session establishment request carries an IP of the first service network element.

In an aspect, the first session establishment request further carries the service flow identifier; and/or the second session establishment request further carries the service flow identifier.

In an aspect, the processor 1001 is configured to invoke the program stored in the memory 1003 to perform:
delivering, by the control plane network element to the first service network element, the forwarding policy carrying the service flow identifier, so that the first service network element forwards, based on the forwarding policy, the service packet corresponding to the service flow identifier; and/or
delivering, by the control plane network element to the first forwarding plane network element, the forwarding policy carrying the service flow identifier, so that the first forwarding plane network element forwards, based on the forwarding policy, the service packet corresponding to the service flow identifier.

In an aspect, the service flow identifier is at least one of an IP of the user terminal, a port number of the user terminal, an IP of the server, or a port number of the server.

In an aspect, the processor 1001 is configured to invoke the program stored in the memory 1003 to further perform:
sending, by the control plane network element, an identification request to a management system, so that the management system returns an identification response message carrying an IP of the first forwarding plane network element; and
if receiving the identification response message sent by the management system, obtaining, by the control plane network element, the IP of the first forwarding plane network element from the identification response message.

In an aspect, the processor 1001 is configured to invoke the program stored in the memory 1003 to further perform:
sending, by the control plane network element, an identification request to a management system, so that the management system returns an identification response message carrying an IP of the first service network element; and
if receiving the identification response message sent by the management system, obtaining, by the control plane network element, the IP of the first service network element from the identification response message.

In an aspect, the identification request carries a service type, or carries current location information of the user terminal and a service type; and the first forwarding plane network element and/or the first service network element are/is configured by the management system based on the identification request.

In an aspect, the control request carries current location information of the user terminal; and the processor 1001 is configured to invoke the program stored in the memory 1003 to perform:
determining, by the control plane network element, the first service network element based on the current location information of the user terminal and preconfiguration information, and obtaining an IP of the first service network element.

In an aspect, the control request carries current location information of the user terminal; the processor 1001 is configured to invoke the program stored in the memory 1003 to perform:
determining, by the control plane network element, the first forwarding plane network element based on the current location information of the user terminal and preconfiguration information, and obtaining an IP of the first forwarding plane network element.

In an aspect, the processor 1001 is configured to invoke the program stored in the memory 1003 to further perform:
if the user terminal is handed over from the first base station to a second base station, receiving, by the control plane network element, a handover notification of the user terminal; and
establishing, by the control plane network element based on the handover notification, a new service packet forwarding path between the second service network element and the second forwarding plane network element to transmit a service packet of the user terminal, where the second service network element is a second server or a service access network element of a second server.

In an aspect, the processor 1001 is configured to invoke the program stored in the memory 1003 to further perform:
sending, by the control plane network element, a context transfer request to the first server, so that the first server transfers service context information related to the user terminal to the second server; or
sending, by the control plane network element, a context transfer request to the first server through the management system, so that the first server transfers service context information related to the user terminal to the second server.

In an aspect, the processor 1001 is configured to invoke the program stored in the memory 1003 to further perform:
if receiving a context transfer acknowledgement message sent by the first server, sending, by the control plane network element, a session deletion request message to the first forwarding plane network element, so that the first forwarding plane network element deletes, based on the session deletion request, the service context information related to the user terminal.

As can be seen from above, in this aspect of the present disclosure, the control plane network element establishes the new service packet forwarding path between the second service network element after the handover and the second forwarding plane network element after the handover, to transmit the service packet of the user terminal. This ensures continuity of an IP session in a moving process of the user terminal, overcomes a disadvantage that a communications link of the user terminal is relatively long after the moving, and reduces a communication latency. The control plane network element sends the context transfer request to the first server to transfer the service context information, thereby ensuring that the handover is lossless.

FIG. 8 is a schematic modular diagram of a first service network element according to an aspect of the present disclosure. As shown in FIG. 8, the first service network element may include a path establishing unit 21 and a sending unit 22.

The path establishing unit 21 is configured to establish a service packet forwarding path between the first service network element and a first forwarding plane network element providing a forwarding service for the user terminal.

The sending unit 22 is configured to transmit a service packet of the user terminal through the service packet forwarding path; where the first forwarding plane network element is determined by the control plane network element based on a received control request related to the user terminal.

Optionally, the first service network element is a first server providing a service for the user terminal or a service access network element of a first server.

Optionally, the service packet forwarding path includes a forwarding tunnel corresponding to a service flow identifier or a forwarding policy corresponding to a service flow identifier.

Optionally, the path establishing unit is configured to:
receive a first session establishment request sent by the control plane network element; and
establish the service packet forwarding tunnel between the first service network element and the first forwarding plane network element providing the forwarding service for the user terminal; where
the first session establishment request carries an IP of the first forwarding plane network element.

Optionally, the first session establishment request carries the service flow identifier; and the sending unit 22 is configured to forward, through the forwarding tunnel corresponding to the service flow identifier, the service packet corresponding to the service flow identifier.

Optionally, the path establishing unit is further configured to:
receive the forwarding policy carrying the service flow identifier and delivered by the control plane network element; and
forward, based on the forwarding policy, the service packet corresponding to the service flow identifier.

Optionally, the first service network element is configured by a management system based on an identification request, where the identification request is sent by the control plane network element to the management system.

Optionally, the first service network element is determined by the control plane network element based on current location information of the user terminal in the received control request and preconfiguration information.

Optionally, the first service network element further includes a transfer unit 23, where
the receiving unit is further configured to receive a context transfer request sent by the control plane network element or by the control plane network element through a management system; and
the transfer unit is further configured to transfer service context information related to the user terminal to a second server.

Optionally, the sending unit 22 is further configured to send, by the first server, a context transfer acknowledgement message to the control plane network element, so that the control plane network element sends a session deletion request message to the first forwarding plane network element, and that the first forwarding plane network element deletes, based on the session deletion request, the service context information related to the user terminal.

Optionally, the first service network element further includes a relationship establishing unit 24, where the relationship establishing unit 24 is configured to establish, by the first service network element, a correspondence between the service flow identifier and the forwarding path.

Optionally, the receiving unit 22 is configured to:
receive the service packet carrying the service flow identifier;
determine, based on the correspondence between the service flow identifier and the forwarding path, the forwarding path corresponding to the service flow identifier; and
forward the service packet through the forwarding path corresponding to the service flow identifier.

For detailed explanations about the foregoing units, refer to the detailed explanations in the method aspects in FIG. 2 to FIG. 5.

As can be seen from above, in this aspect of the present disclosure, the service packet forwarding path is established between the first service network element and the first forwarding plane network element to transmit the service packet of the user terminal, and the service context information is transferred based on the context transfer request, thereby ensuring that the handover is lossless.

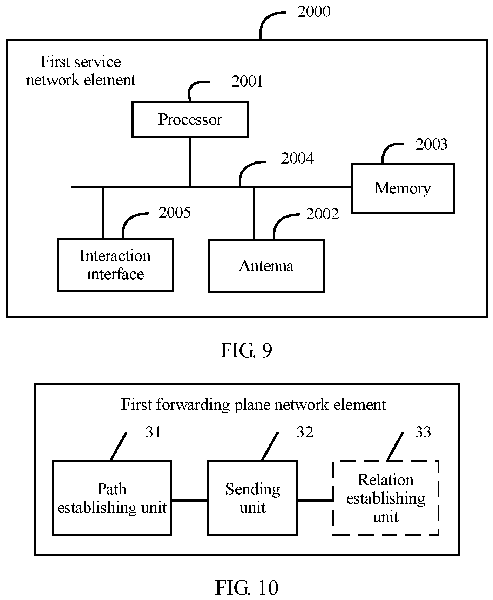

FIG. 9 is a schematic structural diagram of a first service network element 2000 according to an aspect of the present disclosure. As shown in FIG. 9, the first service network element may include at least one processor 2001, for example, a CPU, at least one antenna 2002, a memory 2003, at least one communications bus 2004, and an interaction interface 2005. The communications bus 2004 is configured to implement connection and communication between the components. The antenna 2002 may be configured to send and receive information and data. The memory 2003 may include a high-speed RAM memory, or may further include a non-volatile memory (non-volatile memory), for example, at least one disk storage. The memory 2003 may optionally include at least one memory of the user terminal far away from the processor 2001. In some implementations, the interaction interface 2005 may be configured to input and output information, and may include a display and a keyboard.

Specifically, the processor 21001 is configured to invoke a program stored in the memory 2003 to perform the following operations:
establishing, through a control plane network element, a service packet forwarding path between the first service network element and a first forwarding plane network element providing a forwarding service for the user terminal; and
transmitting a service packet of the user terminal through the service packet forwarding path; where
the first forwarding plane network element is determined by the control plane network element based on a received control request related to the user terminal.

In an aspect, the first service network element is a first server providing a service for the user terminal or a service access network element of a first server.

In an aspect, the service packet forwarding path includes a forwarding tunnel corresponding to a service flow identifier or a forwarding policy corresponding to a service flow identifier.

In an aspect, the processor 21001 is configured to invoke the program stored in the memory 2003 to specifically perform:
receiving a first session establishment request sent by the control plane network element, and establishing the service packet forwarding tunnel between the first service network element and the first forwarding plane network element providing the forwarding service for the user terminal; where
the first session establishment request carries an IP of the first forwarding plane network element.

In an aspect, the first session establishment request carries the service flow identifier; and the processor 21001 is configured to invoke the program stored in the memory 2003 to specifically perform:
forwarding, through the forwarding tunnel corresponding to the service flow identifier, the service packet corresponding to the service flow identifier.

In an aspect, the first session establishment request carries the service flow identifier; and the processor 21001 is configured to invoke the program stored in the memory 2003 to specifically perform:
receiving the forwarding policy carrying the service flow identifier and delivered by the control plane network element; and
forwarding, by the first service network element based on the forwarding policy, the service packet corresponding to the service flow identifier.

In an aspect, the first service network element is configured by a management system based on an identification request, where the identification request is sent by the control plane network element to the management system.

In an aspect, the first service network element is determined by the control plane network element based on current location information of the user terminal in the received control request and preconfiguration information.

In an aspect, the processor 21001 is configured to invoke the program stored in the memory 2003 to further perform:
receiving a context transfer request sent by the control plane network element or by the control plane network element through a management system; and
transferring service context information related to the user terminal to a second server.

In an aspect, the processor 21001 is configured to invoke the program stored in the memory 2003 to further perform:
sending a context transfer acknowledgement message to the control plane network element, so that the control plane network element sends a session deletion request message to the first forwarding plane network element, and that the first forwarding plane network element deletes, based on the session deletion request, the service context information related to the user terminal.

In an aspect, the processor 21001 is configured to invoke the program stored in the memory 2003 to further perform:
establishing a correspondence between the service flow identifier and the forwarding path; and
the processor 21001 is configured to invoke the program stored in the memory 2003 to specifically perform:
   receiving, by the first service network element, the service packet carrying the service flow identifier;
   determining, by the first service network element based on the correspondence between the service flow identifier and the forwarding path, the forwarding path corresponding to the service flow identifier; and
   forwarding, by the first service network element, the service packet through the forwarding path corresponding to the service flow identifier.

For detailed explanations about the foregoing content, refer to the detailed explanations in the method aspects in FIG. 2 to FIG. 5.

As can be seen from above, in this aspect of the present disclosure, the service packet forwarding path is established between the first service network element and the first forwarding plane network element to transmit the service packet of the user terminal, and the service context information is transferred based on the context transfer request, thereby ensuring that the handover is lossless.

FIG. 10 is a schematic modular diagram of a first forwarding plane network element according to an aspect of the present disclosure. As shown in FIG. 10, the first forwarding plane network element may include a path establishing unit 31 and a sending unit 32.

The path establishing unit 31 is configured to establish a service packet forwarding path between the first forwarding plane network element and a first service network element providing a service for the user terminal.

The sending unit 32 is configured to transmit a service packet of the user terminal through the service packet forwarding path; where the first forwarding plane network element is determined by the control plane network element based on a received control request related to the user terminal.

Optionally, the service packet forwarding path includes a forwarding tunnel corresponding to a service flow identifier or a forwarding policy corresponding to a service flow identifier.

Optionally, the path establishing unit 31 is configured to:
receive a second session establishment request sent by the control plane network element; and
establish the forwarding tunnel corresponding to the service flow identifier between the first forwarding plane network element and the first service network element providing the service for the user terminal; where
the second session establishment request carries an IP of the first service network element.

Optionally, the second session establishment request further carries the service flow identifier; and the sending unit 32 is configured to forward, through the forwarding tunnel corresponding to the service flow identifier, the service packet corresponding to the service flow identifier.

Optionally, the path establishing unit 31 is further configured to:
receive the forwarding policy carrying the service flow identifier and delivered by the control plane network element; and
forward, based on the forwarding policy, the service packet corresponding to the service flow identifier.

Optionally, the first forwarding plane network element further includes a relationship establishing unit 33, where
the relationship establishing unit 33 is configured to establish, by the first forwarding plane network element, a correspondence between the service flow identifier and the forwarding path.

Optionally, the sending unit 32 is configured to:
receive the service packet carrying the service flow identifier;
determine, based on the correspondence between the service flow identifier and the forwarding path corresponding to the service flow identifier, the forwarding path corresponding to the service flow identifier; and
forward the service packet through the forwarding path corresponding to the service flow identifier.

Optionally, the first forwarding plane network element is configured by the management system based on an identification request, where the identification request is sent by the control plane network element to the management system.

Optionally, the first forwarding plane network element is determined by the control plane network element based on current location information of the user terminal in the received control request and preconfiguration information.

For detailed explanations about the foregoing content, refer to the detailed explanations in the method aspects in FIG. 2 to FIG. 5.

As can be seen from above, in this aspect of the present disclosure, the service packet forwarding path is established between the first forwarding plane network element and the first service network element to transmit the service packet of the user terminal, thereby providing an end-to-end service packet routing mechanism.

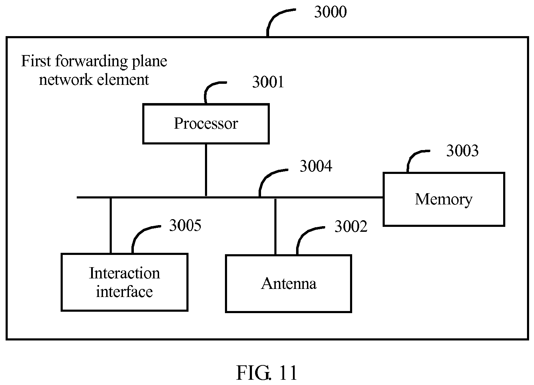

FIG. 11 is a schematic structural diagram of a first forwarding plane network element 3000 according to an aspect of the present disclosure. As shown in FIG. 11, the first service network element may include at least one processor 3001, for example, a CPU, at least one antenna 3002, a memory 3003, at least one communications bus 3004, and an interaction interface 3005. The communications bus 3004 is configured to implement connection and communication between the components. The antenna 3002 may be configured to send and receive information and data. The memory 3003 may include a high-speed RAM memory, or may further include a non-volatile memory (non-volatile memory), for example, at least one disk storage. The memory 3003 may optionally include at least one memory of the user terminal far away from the processor 3001. In some implementations, the interaction interface 3005 may be configured to input and output information, and may include a display and a keyboard.

Specifically, the processor 31001 is configured to invoke a program stored in the memory 3003 to perform the following operations:
establishing, through a control plane network element, a service packet forwarding path between the first forwarding plane network element and a first service network element providing a service for the user terminal; and
transmitting a service packet of the user terminal through the service packet forwarding path, where the first forwarding plane network element is determined by the control plane network element based on a received control request related to the user terminal.

In an aspect, the service packet forwarding path includes a forwarding tunnel corresponding to a service flow identifier or a forwarding policy corresponding to a service flow identifier.

In an aspect, the processor 31001 is configured to invoke the program stored in the memory 3003 to specifically perform:
receiving a second session establishment request sent by the control plane network element, and establishing the forwarding tunnel corresponding to the service flow identifier between the first forwarding plane network element and the first service network element providing the service for the user terminal; where
the second session establishment request carries an IP of the first service network element.

In an aspect, the processor 31001 is configured to invoke the program stored in the memory 3003 to further perform:
forwarding, through the forwarding tunnel corresponding to the service flow identifier, the service packet corresponding to the service flow identifier.

In an aspect, the processor 31001 is configured to invoke the program stored in the memory 3003 to specifically perform:
receiving the forwarding policy carrying the service flow identifier and delivered by the control plane network element; and
forwarding, based on the forwarding policy, the service packet corresponding to the service flow identifier.

In an aspect, the processor 31001 is configured to invoke the program stored in the memory 3003 to further perform:
establishing a correspondence between the service flow identifier and the forwarding path.

In an aspect, the processor 31001 is configured to invoke the program stored in the memory 3003 to specifically perform:
receiving the service packet carrying the service flow identifier;
determining, based on the correspondence between the service flow identifier and the forwarding path corresponding to the service flow identifier, the forwarding path corresponding to the service flow identifier; and
forwarding the service packet through the forwarding path corresponding to the service flow identifier.

In an aspect, the first forwarding plane network element is configured by the management system based on an identification request, where the identification request is sent by the control plane network element to the management system.

In an aspect, the first forwarding plane network element is determined by the control plane network element based on current location information of the user terminal in the received control request and preconfiguration information.

For detailed explanations about the foregoing content, refer to the detailed explanations in the method aspects in FIG. 2 to FIG. 5.

As can be seen from above, in this aspect of the present disclosure, the service packet forwarding path is established between the first forwarding plane network element and the first service network element to transmit the service packet of the user terminal, thereby providing an end-to-end service packet routing mechanism.

Still referring to FIG. 1, the control system mainly includes the following network elements: a user terminal UE, a first base station BS 1, a second base station BS 2, a first forwarding plane network element, a second forwarding plane network element, a control plane network element, a management system, a first service network element, and a second service network element.

The user terminal UE sends, to the control plane network element through the first base station BS 1, a control request related to the user terminal that accesses a network.

The control plane network element receives the control request related to the user terminal that accesses the network through the first base station, and determines, based on the control request, the first service network element providing a service for the user terminal.

The control plane network element determines the first forwarding plane network element providing a forwarding service for the user terminal.

The control plane network element establishes a service packet forwarding path between the first service network element and the first forwarding plane network element to transmit a service packet of the user terminal.

In an aspect, the first service network element is a first server providing a service for the user terminal or a service access network element of a first server.

In an aspect, the control request is an access request or a service request.

In an aspect, the service packet forwarding path includes a forwarding tunnel corresponding to a service flow identifier or a forwarding policy corresponding to a service flow identifier.

In an aspect, the control plane network element sends a first session establishment request to the first service network element, where the first session establishment request carries an IP of the first forwarding plane network element; and
the first service network element receives the first session establishment request sent by the control plane network element, and establishes the service packet forwarding tunnel between the first service network element and the first forwarding plane network element providing the forwarding service for the user terminal.

In an aspect, the control plane network element sends a second session establishment request to the first forwarding plane network element, where the second session establishment request carries an IP of the first service network element; and
the first forwarding plane network element receives the second session establishment request sent by the control plane network element, and establishes the forwarding tunnel corresponding to the service flow identifier between the first forwarding plane network element and the first service network element providing the service for the user terminal.

In an aspect, the first session establishment request further carries the service flow identifier, and the first service network element forwards, through the forwarding tunnel corresponding to the service flow identifier, the service packet corresponding to the service flow identifier; and/or the second session establishment request further carries the service flow identifier, and the first forwarding plane network element forwards, through the forwarding tunnel corresponding to the service flow identifier, the service packet corresponding to the service flow identifier.

In an aspect, the control plane network element delivers, to the first service network element, the forwarding policy carrying the service flow identifier; and the first service network element receives the forwarding policy carrying the service flow identifier and delivered by the control plane network element, and forwards, based on the forwarding policy, the service packet corresponding to the service flow identifier; and/or
the control plane network element delivers, to the first forwarding plane network element, the forwarding policy carrying the service flow identifier; and the first forwarding plane network element receives the forwarding policy carrying the service flow identifier and delivered by the control plane network element, and forwards, based on the forwarding policy, the service packet corresponding to the service flow identifier.

In an aspect, the service flow identifier is at least one of an IP of the user terminal, a port number of the user terminal, an IP of the server, or a port number of the server.

In an aspect, the control plane network element sends an identification request to the management system;
the management system returns an identification response message carrying an IP of the first forwarding plane network element; and
if receiving the identification response message sent by the management system, the control plane network element obtains the IP of the first forwarding plane network element from the identification response message.

In an aspect, the control plane network element sends an identification request to the management system;
the management system configures the first service network element based on the identification request, and returns an identification response message carrying an IP of the first service network element; and
if receiving the identification response message sent by the management system, the control plane network element obtains the IP of the first service network element from the identification response message.

In an aspect, the identification request carries a service type, or carries current location information of the user terminal and a service type; and the first forwarding plane network element and/or the first service network element are/is configured by the management system based on the identification request.

In an aspect, the control request carries current location information of the user terminal; and the control plane network element determines the first service network element based on the current location information of the user terminal and preconfiguration information, and obtains an IP of the first service network element.

In an aspect, the control request carries current location information of the user terminal; and the control plane network element determines the first forwarding plane network element based on the current location information of the user terminal and preconfiguration information, and obtains an IP of the first forwarding plane network element.

In an aspect, the user terminal UE is handed over from the first base station BS 1 to the second base station BS 2; the control plane network element receives a handover notification of the user terminal; and
the control plane network element establishes, based on the handover notification, a new service packet forwarding path between the second service network element and the second forwarding plane network element to transmit a service packet of the user terminal, where the second service network element is a second server or a service access network element of a second server.

In an aspect, the control plane network element sends a context transfer request to the first server; and the first server receives the context transfer request sent by the control plane network element or by the control plane network element through the management system, and transfers service context information related to the user terminal to the second server; or
the control plane network element sends a context transfer request to the first server through the management system, so that the first server transfers service context information related to the user terminal to the second server.

In an aspect, the first server sends a context transfer acknowledgement message to the control plane network element;
the control plane network element receives the context transfer acknowledgement message sent by the first server;
the control plane network element sends a session deletion request message to the first forwarding plane network element; and
the first forwarding plane network element deletes, based on the session deletion request, the service context information related to the user terminal.

In an aspect, the first service network element establishes a correspondence between the service flow identifier and the forwarding path;
the first service network element receives the service packet carrying the service flow identifier;
the first service network element determines, based on the correspondence between the service flow identifier and the forwarding path, the forwarding path corresponding to the service flow identifier; and
the first service network element forwards the service packet through the forwarding path corresponding to the service flow identifier.

In an aspect, the first forwarding plane network element establishes a correspondence between the service flow identifier and the forwarding path;
the first forwarding plane network element receives the service packet carrying the service flow identifier;
the first forwarding plane network element determines, based on the correspondence between the service flow identifier and the forwarding path corresponding to the service flow identifier, the forwarding path corresponding to the service flow identifier; and
the first forwarding plane network element forwards the service packet through the forwarding path corresponding to the service flow identifier.

For detailed explanations about the foregoing content, refer to the detailed explanations in the method aspects in FIG. 2 to FIG. 5.

As can be seen from above, in this aspect of the present disclosure, the service packet forwarding path is established between the first forwarding plane network element and the first service network element to transmit the service packet of the user terminal, thereby providing an end-to-end service packet routing mechanism.

An aspect of the present disclosure further provides a computer-readable storage medium storing one or more programs, where the one or more programs include an instruction, and when the instruction is executed by a control plane network element including an antenna and a plurality of application programs, the instruction is used to enable the control plane network element to perform the methods in FIG. 2 to FIG. 5.

It should be noted that, to make the description brief, the foregoing method aspects are expressed as a series of actions. However, a person skilled in the art should appreciate that the present disclosure is not limited to the described action sequence, because according to the present disclosure, some steps may be performed in other sequences or performed simultaneously. In addition, a person skilled in the art should also appreciate that all the aspects described in the specification are aspects as an example, and the related actions and modules are not necessarily mandatory to the present disclosure.

In the foregoing aspects, the descriptions of the aspects have respective focuses. For a part that is not described in detail in an aspect, reference may be made to related descriptions in other aspects.

Steps in the method in the aspects of the present disclosure may be adjusted, combined, or deleted according to an actual requirement.

Units in the apparatus in the aspects of the present disclosure may be adjusted, combined, or deleted according to an actual requirement. A person skilled in the art may integrate or combine different aspects and characteristics of different aspects described in this specification.

With descriptions of the foregoing aspects, a person skilled in the art may clearly understand that the present disclosure may be implemented by hardware, firmware or a combination thereof. When the present disclosure is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following is used as an example but is not limited: The computer-readable medium may include a random access memory (Random Access Memory, RAM), a read-only memory (Read-Only Memory, ROM), an electrically erasable programmable read-only memory (Electrically Erasable Programmable Read-Only Memory, EEPROM), a compact disc read-only memory (Compact Disc Read-Only Memory, CD-ROM) or other optical disc storage, a disk storage medium or other disk storage, or any other medium that can be used to carry or store expected program code in a command or data structure form and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (Digital Subscriber Line, DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present disclosure includes a compact disc (CD), a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

## Claims

1. A communication control method, comprising:
receiving (S101), by a control plane network element, a control request related to a user terminal that accesses a network through a first base station, and determining, based on the control request, a first service network element providing a service for the user terminal;
determining (S102), by the control plane network element, a first forwarding plane network element providing a forwarding service for the user terminal; and
establishing (S103), by the control plane network element, a service packet forwarding path between the first service network element and the first forwarding plane network element to transmit a service packet of the user terminal;
wherein after the establishing, by the control plane network element, a service packet forwarding path between the first service network element and the first forwarding plane network element, the method further comprises:
if the user terminal is handed over from a first base station to a second base station, receiving, by the control plane network element, a handover notification of the user terminal; and
establishing, by the control plane network element based on the handover notification, a new service packet forwarding path between a second service network element and a second forwarding plane network element to transmit a service packet of the user terminal, wherein the second service network element is a second server or a service access network element of a second server; and
wherein after the receiving, by the control plane network element, a handover notification of the user terminal, the method further comprises:
sending, by the control plane network element, a context transfer request to the first service network element for the first service network element to transfer service context information related to the user terminal to the second service network element; or
sending, by the control plane network element, a context transfer request to the first service network element through the management system for the first service network element to transfer service context information related to the user terminal to the second service network element.

2. The method according to claim 1, wherein the service packet forwarding path comprises a forwarding tunnel corresponding to a service flow identifier, and establishing, by the control plane network element, the forwarding tunnel corresponding to the service flow identifier between the first service network element and the first forwarding plane network element comprises:
sending, by the control plane network element, a first session establishment request to the first service network element, wherein the first session establishment request carries an IP address of the first forwarding plane network element; and
sending, by the control plane network element, a second session establishment request to the first forwarding plane network element, wherein the second session establishment request carries an IP address of the first service network element.

3. The method according to claim 1, wherein the service packet forwarding path comprises a forwarding policy corresponding to a service flow identifier, and establishing, by the control plane network element, the forwarding policy corresponding to the service flow identifier between the first service network element and the first forwarding plane network element comprises:
delivering, by the control plane network element to the first service network element, the forwarding policy carrying the service flow identifier for the first service network element to forward based on the forwarding policy, the service packet corresponding to the service flow identifier; and/or
delivering, by the control plane network element to the first forwarding plane network element, the forwarding policy carrying the service flow identifier for the first forwarding plane network element to forward based on the forwarding policy, the service packet corresponding to the service flow identifier.

4. The method according to claim 1, wherein the service packet forwarding path comprises a forwarding tunnel corresponding to a service flow identifier, and before establishing, by the control plane network element, the forwarding tunnel corresponding to the service flow identifier between the first service network element and the first forwarding plane network element, the method further comprises:
sending, by the control plane network element, an identification request to a management system for the management system to return an identification response message carrying an IP address of the first forwarding plane network element; and
if receiving the identification response message from the management system, obtaining, by the control plane network element, the IP address of the first forwarding plane network element from the identification response message.

5. The method according to claim 1, wherein the service packet forwarding path comprises a forwarding tunnel corresponding to a service flow identifier and, before establishing, by the control plane network element, the forwarding tunnel corresponding to the service flow identifier between the first service network element and the first forwarding plane network element, the method further comprises:
sending, by the control plane network element, an identification request to a management system for the management system to return an identification response message carrying an IP address of the first service network element; and
if receiving the identification response message from the management system, obtaining, by the control plane network element, the IP address of the first service network element from the identification response message.

6. The method according to claim 4 or 5, wherein the identification request carries a service type, or carries current location information of the user terminal and a service type; and the first forwarding plane network element and/or the first service network element are/is configured by the management system based on the identification request.

7. A communication control method, comprising:
establishing, by a first service network element through a control plane network element, a service packet forwarding path between the first service network element and a first forwarding plane network element providing a forwarding service for a user terminal; and
transmitting, by the first service network element, a service packet of the user terminal through the service packet forwarding path; wherein
the first forwarding plane network element is determined by the control plane network element based on a received control request related to the user terminal;
wherein after the establishing, by a first service network element, a service packet forwarding path between the first service network element and a first forwarding plane network element providing a forwarding service for the user terminal, the method further comprises:
receiving, by the first service network element, a context transfer request from the control plane network element or from a management system; and
transferring, by the first service network element, service context information related to the user terminal to a second service network element; and
wherein after the receiving, by the first service network element, a context transfer request from the control plane network element or from a management system, the method further comprises:
sending, by the first service network element, a context transfer acknowledgement message to the control plane network element.

8. The method according to claim 7, wherein the method further comprises:
establishing, by the first service network element, a correspondence between the service flow identifier and the forwarding path; and
the transmitting, by the first service network element, a service packet of the user terminal through the service packet forwarding path comprises:
receiving, by the first service network element, the service packet carrying the service flow identifier;
determining, by the first service network element based on the correspondence between the service flow identifier and the forwarding path, the forwarding path corresponding to the service flow identifier; and
forwarding, by the first service network element, the service packet through the forwarding path corresponding to the service flow identifier.

9. A communication control method, comprising:
establishing, by a first forwarding plane network element through a control plane network element, a service packet forwarding path between the first forwarding plane network element and a first service network element providing a service for a user terminal according to any one of claims 1 to 6; and
transmitting, by the first forwarding plane network element, a service packet of the user terminal through the service packet forwarding path, wherein the first forwarding plane network element is determined by the control plane network element based on a received control request related to the user terminal.

10. The method according to claim 9, wherein the method further comprises:
establishing, by the first forwarding plane network element, a correspondence between the service flow identifier and the forwarding path; and
the transmitting, by the first forwarding plane network element, a service packet of the user terminal through the service packet forwarding path comprises:
receiving, by the first forwarding plane network element, the service packet carrying the service flow identifier;
determining, by the first forwarding plane network element based on the correspondence between the service flow identifier and the forwarding path corresponding to the service flow identifier, the forwarding path corresponding to the service flow identifier; and
forwarding, by the first forwarding plane network element, the service packet through the forwarding path corresponding to the service flow identifier.

11. A control plane network element, comprising:
a receiving unit (11), configured to receive a control request related to a user terminal that accesses a network through a first base station;
a determining unit (12), configured to determine, based on the control request, a first service network element providing a service for the user terminal; wherein
the determining unit is further configured to determine a first forwarding plane network element providing a forwarding service for the user terminal; and
a path establishing unit (13), configured to establish a service packet forwarding path between the first service network element and the first forwarding plane network element to transmit a service packet of the user terminal;
wherein
the receiving unit is further configured to receive a handover notification of the user terminal if the user terminal is handed over from the first base station to a second base station; and
the path establishing unit is further configured to establish, based on the handover notification, a new service packet forwarding path between the second service network element and the second forwarding plane network element to transmit a service packet of the user terminal, wherein the second service network element is a second server or a service access network element of a second server; and
wherein
the sending unit is further configured to send a context transfer request to the first server for the first server to transfer service context information related to the user terminal to the second server; or
the sending unit is further configured to send a context transfer request to the first server through the management system for the first server to transfer service context information related to the user terminal to the second server.

12. A first service network element, comprising:
a path establishing unit (21), configured to establish a service packet forwarding path between the first service network element and a first forwarding plane network element providing a forwarding service for the user terminal; and
a sending unit (22), configured to transmit a service packet of the user terminal through the service packet forwarding path; wherein
the first forwarding plane network element is determined by the control plane network element based on a received control request related to the user terminal;
wherein the first service network element further comprises a transfer unit (23), wherein
the receiving unit is further configured to receive a context transfer request from the control plane network element or from a management system; and
the transfer unit is further configured to transfer service context information related to the user terminal to a second server; and
wherein
the sending unit is further configured to send a context transfer acknowledgement message to the control plane network element.

13. A first forwarding plane network element, comprising:
a path establishing unit (31), configured to establish a service packet forwarding path between the first forwarding plane network element and a first service network element providing a service for a user terminal in accordance with the method of claim 9 or 10; and
a sending unit (32), configured to transmit a service packet of the user terminal through the service packet forwarding path, wherein the first forwarding plane network element is determined by a control plane network element based on a received control request related to the user terminal.

14. The method according to any one of claims 1 to 8, or the control plane network element according to claim 11, or the first service network element according to claim 12, wherein the context transfer request comprises an IP of the second server.

## Patentansprüche

1. Kommunikationssteuerverfahren, umfassend:
Empfangen (S101), in einem Netzwerkelement einer Steuerebene, einer Steueranforderung, die sich auf ein Benutzerendgerät bezieht, das durch eine erste Basisstation auf ein Netzwerk zugreift, und Ermitteln aufgrund der Steueranforderung eines ersten Dienstnetzwerkelements, das einen Dienst für das Benutzerendgerät bereitstellt;
Ermitteln (S102) durch das Netzwerkelement der Steuerebene, eines ersten Netzwerkelements einer Weiterleitungsebene, das einen Weiterleitungsdienst für das Benutzerendgerät bereitstellt; und
Einrichten (S103), durch das Netzwerkelement der Steuerebene, eines Dienstpaketweiterleitungspfads zwischen dem ersten Dienstnetzwerkelement und dem ersten Netzwerkelement der Weiterleitungsebene, um ein Dienstpaket des Benutzerendgeräts zu übertragen;
wobei das Verfahren nach dem Einrichten, durch das Netzwerkelement der Steuerebene, eines Dienstpaketweiterleitungspfads zwischen dem ersten Dienstnetzwerkelement und dem ersten Netzwerkelement der Weiterleitungsebene außerdem umfasst:
wenn das Benutzerendgerät von einer ersten Basisstation an eine zweite Basisstation übergeben wird, Empfangen, in dem Netzwerkelement der Steuerebene, einer Übergabebenachrichtigung des Benutzerendgeräts; und
Einrichten, durch das Netzwerkelement der Steuerebene aufgrund der Übergabebenachrichtigung, eines neuen Dienstpaketweiterleitungspfads zwischen einem zweiten Dienstnetzwerkelement und einem zweiten Netzwerkelement der Weiterleitungsebene, um ein Dienstpaket des Benutzerendgeräts zu übertragen, wobei das zweite Dienstnetzwerkelement ein zweier Server oder ein Dienstzugriffsnetzwerkelement eines zweiten Servers ist; und
wobei das Verfahren nach dem Empfangen, in dem Netzwerkelement der Steuerebene, einer Übergabebenachrichtigung des Benutzerendgeräts außerdem umfasst:
Senden einer Kontextweitergabeanforderung von dem Netzwerkelement der Steuerebene an das erste Dienstnetzwerkelement, damit das erste Dienstnetzwerkelement Dienstkontextinformationen, die sich auf das Benutzerendgerät beziehen, an das zweite Dienstnetzwerkelement weitergibt; oder Senden einer Kontextweitergabeanforderung von dem Netzwerkelement der Steuerebene durch das Verwaltungssystem an das erste Dienstnetzwerkelement, damit das erste Dienstnetzwerkelement Dienstkontextinformationen, die sich auf das Benutzerendgerät beziehen, an das zweite Dienstnetzwerkelement weitergibt.

2. Verfahren nach Anspruch 1, wobei der Dienstpaketweiterleitungspfad einen Weiterleitungsdatentunnel umfasst, der einer Dienststromkennung entspricht, und wobei ein Einrichten, durch das Netzwerkelement der Steuerebene, eines Weiterleitungsdatentunnels, welcher der Dienststromkennung entspricht, zwischen dem ersten Dienstnetzwerkelement und dem ersten Netzwerkelement der Weiterleitungsebene umfasst:
Senden einer ersten Sitzungseinrichtungsanforderung von dem Netzwerkelement der Steuerebene an das erste Dienstnetzwerkelement, wobei die erste Sitzungseinrichtungsanforderung eine IP-Adresse des ersten Netzwerkelements der Weiterleitungsebene mitführt; und
Senden einer zweiten Sitzungseinrichtungsanforderung von dem Netzwerkelement der Steuerebene an das erste Netzwerkelement der Weiterleitungsebene, wobei die zweite Sitzungseinrichtungsanforderung eine IP-Adresse des ersten Dienstnetzwerkelements mitführt.

3. Verfahren nach Anspruch 1, wobei der Dienstpaketweiterleitungspfad eine Weiterleitungsrichtlinie umfasst, die einer Dienststromkennung entspricht, und wobei ein Einrichten, durch das Netzwerkelement der Steuerebene, der Weiterleitungsrichtlinie, die der Dienststromkennung entspricht, zwischen dem ersten Dienstnetzwerkelement und dem ersten Netzwerkelement der Weiterleitungsebene umfasst:
Überbringen der Weiterleitungsrichtlinie, welche die Dienststromkennung mitführt, von dem Netzwerkelement der Steuerebene an das erste Dienstnetzwerkelement, damit das erste Dienstnetzwerkelement aufgrund der Weiterleitungsrichtlinie das Dienstpaket weiterleitet, das der Dienststromkennung entspricht; und/oder
Überbringen der Weiterleitungsrichtlinie, welche die Dienststromkennung mitführt, von dem Netzwerkelement der Steuerebene an das erste Netzwerkelement der Weiterleitungsebene, damit das erste Netzwerkelement der Weiterleitungsebene aufgrund der Weiterleitungsrichtlinie das Dienstpaket weiterleitet, das der Dienststromkennung entspricht.

4. Verfahren nach Anspruch 1, wobei der Dienstpaketweiterleitungspfad einen Weiterleitungsdatentunnel umfasst, der einer Dienststromkennung entspricht, und wobei das Verfahren vor dem Einrichten, durch das Netzwerkelement der Steuerebene, des Weiterleitungsdatentunnels, welcher der Dienststromkennung entspricht, zwischen dem ersten Dienstnetzwerkelement und dem ersten Netzwerkelement der Weiterleitungsebene außerdem umfasst:
Senden einer Identifizierungsanforderung von dem Netzwerkelement der Steuerebene an ein Verwaltungssystem, damit das Verwaltungssystem eine Identifizierungsantwortnachricht zurücksendet, die eine IP-Adresse des ersten Netzwerkelements der Weiterleitungsebene mitführt; und
wenn die Identifizierungsantwortnachricht von dem Verwaltungssystem empfangen wird, Erhalten, in dem Netzwerkelement der Steuerebene, der IP-Adresse des ersten Netzwerkelements der Weiterleitungsebene aus der Identifizierungsantwortnachricht.

5. Verfahren nach Anspruch 1, wobei der Dienstpaketweiterleitungspfad einen Weiterleitungsdatentunnel umfasst, der einer Dienststromkennung entspricht, und wobei das Verfahren vor dem Einrichten, durch das Netzwerkelement der Steuerebene, des Weiterleitungsdatentunnels, welcher der Dienststromkennung entspricht, zwischen dem ersten Dienstnetzwerkelement und dem ersten Netzwerkelement der Weiterleitungsebene außerdem umfasst:
Senden einer Identifizierungsanforderung von dem Netzwerkelement der Steuerebene an ein Verwaltungssystem, damit das Verwaltungssystem eine Identifizierungsantwortnachricht zurücksendet, die eine IP-Adresse des ersten Dienstnetzwerkelements mitführt; und
wenn die Identifizierungsantwortnachricht von dem Verwaltungssystem empfangen wird, Erhalten, in dem Netzwerkelement der Steuerebene, der IP-Adresse des ersten Dienstnetzwerkelements aus der Identifizierungsantwortnachricht.

6. Verfahren nach Anspruch 4 oder 5, wobei die Identifizierungsanforderung eine Dienstart mitführt oder aktuelle Standortinformationen des Benutzerendgeräts und eine Dienstart mitführt; und wobei das erste Netzwerkelement der Weiterleitungsebene und/oder das erste Dienstnetzwerkelement durch das Verwaltungssystem aufgrund der Identifizierungsanforderung konfiguriert wird/werden.

7. Kommunikationssteuerverfahren, umfassend:
Einrichten, durch ein erstes Dienstnetzwerkelement mithilfe eines Netzwerkelements einer Steuerebene, eines Dienstpaketweiterleitungspfads zwischen dem ersten Dienstnetzwerkelement und einem ersten Netzwerkelement einer Weiterleitungsebene, um einen Weiterleitungsdienst für ein Benutzerendgerät bereitzustellen; und
Übertragen eines Dienstpakets des Benutzerendgeräts von dem ersten Dienstnetzwerkelement durch den Dienstpaketweiterleitungspfad; wobei das erste Netzwerkelement der Weiterleitungsebene durch das Netzwerkelement der Steuerebene aufgrund einer empfangenen auf das Benutzerendgerät bezogenen Steueranforderung ermittelt wird;
wobei das Verfahren nach dem Einrichten, durch ein erstes Dienstnetzwerkelement, eines Dienstpaketweiterleitungspfads zwischen dem ersten Dienstnetzwerkelement und einem ersten Netzwerkelement einer Weiterleitungsebene, um einen Weiterleitungsdienst für ein Benutzerendgerät bereitzustellen, außerdem umfasst:
Empfangen, in dem ersten Dienstnetzwerkelement, einer Kontextweitergabeanforderung von dem Netzwerkelement der Steuerebene oder von einem Verwaltungssystem; und
Weitergeben, durch das erste Dienstnetzwerkelement, von Dienstkontextinformationen, die sich auf das Benutzerendgerät beziehen, an ein zweites Dienstnetzwerkelement; und
wobei das Verfahren nach dem Empfangen, in dem ersten Dienstnetzwerkelement, einer Kontextweitergabeanforderung von dem Netzwerkelement der Steuerebene oder von einem Verwaltungssystem außerdem umfasst:
Senden einer Kontextweitergabebestätigungsnachricht von dem ersten Dienstnetzwerkelement an das Netzwerkelement der Steuerebene.

8. Verfahren nach Anspruch 7, wobei das Verfahren außerdem umfasst:
Einrichten, durch das erste Dienstnetzwerkelement, einer Entsprechung zwischen der Dienststromkennung und dem Weiterleitungspfad; und
wobei das Übertragen eines Dienstpakets des Benutzerendgeräts von dem ersten Dienstnetzwerkelement durch den Dienstpaketweiterleitungspfad umfasst:
Empfangen, in dem ersten Dienstnetzwerkelement, des Dienstpakets, das die Dienststromkennung mitführt;
Ermitteln, durch das erste Dienstnetzwerkelement aufgrund der Entsprechung zwischen der Dienststromkennung und dem Weiterleitungspfad, des Weiterleitungspfads, welcher der Dienststromkennung entspricht; und
Weiterleiten des Dienstpakets von dem ersten Dienstnetzwerkelement durch den Weiterleitungspfad, welcher der Dienststromkennung entspricht.

9. Kommunikationssteuerverfahren, umfassend:
Einrichten, durch ein erstes Netzwerkelement einer Weiterleitungsebene mithilfe eines Netzwerkelements einer Steuerebene, eines Dienstpaketweiterleitungspfads zwischen dem ersten Netzwerkelement der Weiterleitungsebene und einem ersten Dienstnetzwerkelement, um einen Dienst für ein Benutzerendgerät nach einem der Ansprüche 1 bis 6 bereitzustellen; und
Übertragen eines Dienstpakets des Benutzerendgeräts von dem ersten Netzwerkelement der Weiterleitungsebene durch den Dienstpaketweiterleitungspfad, wobei das erste Netzwerkelement der Weiterleitungsebene durch das Netzwerkelement der Steuerebene aufgrund einer empfangenen auf das Benutzerendgerät bezogenen Steueranforderung ermittelt wird.

10. Verfahren nach Anspruch 9, wobei das Verfahren außerdem umfasst:
Einrichten, durch das erste Netzwerkelement der Weiterleitungsebene, einer Entsprechung zwischen der Dienststromkennung und dem Weiterleitungspfad; und
wobei das Übertragen eines Dienstpakets des Benutzerendgeräts von dem ersten Netzwerkelement der Weiterleitungsebene durch den Dienstpaketweiterleitungspfad, umfasst:
Empfangen, in dem ersten Netzwerkelement der Weiterleitungsebene, des Dienstpakets, das die Dienststromkennung mitführt;
Ermitteln, durch das erste Netzwerkelement der Weiterleitungsebene aufgrund der Entsprechung zwischen der Dienststromkennung und dem Weiterleitungspfad, welcher der ersten Dienststromkennung entspricht, des Weiterleitungspfads, welcher der Dienststromkennung entspricht; und
Weiterleiten des Dienstpakets von dem ersten Netzwerkelement der Weiterleitungsebene durch den Weiterleitungspfad, welcher der Dienststromkennung entspricht.

11. Netzwerkelement einer Steuerebene, umfassend:
eine Empfangseinheit (11), die konfiguriert ist zum Empfangen einer Steueranforderung, die sich auf ein Benutzerendgerät bezieht, das durch eine erste Basisstation auf ein Netzwerk zugreift;
eine Ermittlungseinheit (12), die konfiguriert ist zum Ermitteln aufgrund der Steueranforderung eines ersten Dienstnetzwerkelements, das einen Dienst für das Benutzerendgerät bereitstellt; wobei
die Ermittlungseinheit außerdem konfiguriert ist zum Ermitteln eines ersten Netzwerkelements einer Weiterleitungsebene, das einen Weiterleitungsdienst für das Benutzerendgerät bereitstellt; und
eine Pfadeinrichtungseinheit (13), die konfiguriert ist zum Einrichten eines Dienstpaketweiterleitungspfads zwischen dem ersten Dienstnetzwerkelement und dem ersten Netzwerkelement der Weiterleitungsebene, um ein Dienstpaket des Benutzerendgeräts zu übertragen;
wobei
die Empfangseinheit außerdem konfiguriert ist zum Empfangen einer Übergabebenachrichtigung des Benutzerendgeräts, wenn das Benutzerendgerät von der ersten Basisstation an eine zweite Basisstation übergeben wird; und
wobei die Pfadeinrichtungseinheit außerdem konfiguriert ist zum Einrichten aufgrund der Übergabebenachrichtigung, eines neuen Dienstpaketweiterleitungspfads zwischen dem zweiten Dienstnetzwerkelement und dem zweiten Netzwerkelement der Weiterleitungsebene, um ein Dienstpaket des Benutzerendgeräts zu übertragen, wobei das zweite Dienstnetzwerkelement ein zweier Server oder ein Dienstzugriffsnetzwerkelement eines zweiten Servers ist; und
wobei
die Sendeeinheit außerdem konfiguriert ist zum Senden einer Kontextweitergabeanforderung an den ersten Server, damit das erste Server Dienstkontextinformationen in Bezug auf das Benutzerendgerät an den zweiten Server weitergibt; oder
die Sendeeinheit außerdem konfiguriert ist zum Senden einer Kontextweitergabeanforderung durch das Verwaltungssystem an den ersten Server, damit das erste Server Dienstkontextinformationen, die sich auf das Benutzerendgerät beziehen, an den zweiten Server weitergibt.

12. Erstes Dienstnetzwerkelement, umfassend:
eine Pfadeinrichtungseinheit (21), die konfiguriert ist zum Einrichten eines Dienstpaketweiterleitungspfads zwischen dem ersten Dienstnetzwerkelement und einem ersten Netzwerkelement einer Weiterleitungsebene, um einen Weiterleitungsdienst für das Benutzerendgerät bereitzustellen; und
eine Sendeeinheit (22), die konfiguriert ist zum Übertragen eines Dienstpakets des Benutzerendgeräts durch den Dienstpaketweiterleitungspfad; wobei
das erste Netzwerkelement der Weiterleitungsebene durch das Netzwerkelement der Steuerebene aufgrund einer empfangenen auf das Benutzerendgerät bezogenen Steueranforderung ermittelt wird;
wobei das Dienstnetzwerkelement außerdem eine Weitergabeeinheit (23) umfasst, wobei
die Empfangseinheit außerdem konfiguriert ist zum Empfangen einer Kontextweitergabeanforderung von dem Netzwerkelement der Steuerebene oder von einem Verwaltungssystem; und
die Weitergabeeinheit außerdem konfiguriert ist zum Weitergeben von Dienstkontextinformationen, die sich auf das Benutzerendgerät beziehen, an einen zweiten Server; und
wobei
die Sendeeinheit außerdem konfiguriert ist zum Senden einer Kontextweitergabebestätigungsnachricht an das Netzwerkelement der Steuerebene.

13. Erstes Netzwerkelement einer Weiterleitungsebene, umfassend:
eine Pfadeinrichtungseinheit (31), die konfiguriert ist zum Einrichten eines Dienstpaketweiterleitungspfads zwischen dem ersten Netzwerkelement der Weiterleitungsebene und einem ersten Dienstnetzwerkelement, um einen Dienst für ein Benutzerendgerät gemäß dem Verfahren nach einem der Ansprüche 9 oder 10 bereitzustellen; und
eine Sendeeinheit (32), die konfiguriert ist zum Übertragen eines Dienstpakets des Benutzerendgeräts durch den Dienstpaketweiterleitungspfad, wobei das erste Netzwerkelement der Weiterleitungsebene durch ein Netzwerkelement einer Steuerebene aufgrund einer empfangenen auf das Benutzerendgerät bezogenen Steueranforderung ermittelt wird.

14. Verfahren nach einem der Ansprüche 1 bis 8 oder Netzwerkelement der Steuerebene nach Anspruch 11 oder erstes Dienstnetzwerkelement nach Anspruch 12, wobei die Kontextweitergabeanforderung ein IP des zweiten Servers umfasst.

## Revendications

1. Procédé de commande de communication, consistant à :
recevoir (S101), par un élément de réseau de plan de commande, une requête de commande relative à un terminal utilisateur qui accède à un réseau par l'intermédiaire d'une première station de base, et déterminer, sur la base de la requête de commande, un premier élément de réseau de service fournissant un service pour le terminal utilisateur ;
déterminer (S102), par l'élément de réseau de plan de commande, un premier élément de réseau de plan de retransmission fournissant un service de retransmission pour le terminal utilisateur ; et
établir (S103), par l'élément de réseau de plan de commande, un trajet de retransmission de paquet de service entre le premier élément de réseau de service et le premier élément de réseau de plan de retransmission pour émettre un paquet de service du terminal utilisateur ;
dans lequel, après l'établissement, par l'élément de réseau de plan de commande, d'un trajet de retransmission de paquet de service entre le premier élément de réseau de service et le premier élément de réseau de plan de retransmission, le procédé consiste en outre à :
si le terminal utilisateur est transféré d'une première station de base à une seconde station de base, recevoir, par l'élément de réseau de plan de commande, une notification de transfert du terminal utilisateur ; et
établir, par l'élément de réseau de plan de commande sur la base de la notification de transfert, un nouveau trajet de retransmission de paquet de service entre un second élément de réseau de service et un second élément de réseau de plan de retransmission pour émettre un paquet de service du terminal utilisateur, dans lequel le second élément de réseau de service est un second serveur ou un élément de réseau d'accès au service d'un second serveur ; et
dans lequel, après la réception, par l'élément de réseau de plan de commande, d'une notification de transfert du terminal utilisateur, le procédé consiste en outre à :
envoyer, par l'élément de réseau de plan de commande, une requête de transfert de contexte au premier élément de réseau de service pour que le premier élément de réseau de service transfère des informations de contexte de service relatives au terminal utilisateur au second élément de réseau de service ; ou
envoyer, par l'élément de réseau de plan de commande, une requête de transfert de contexte au premier élément de réseau de service par l'intermédiaire du système de gestion pour que le premier élément de réseau de service transfère des informations de contexte de service relatives au terminal utilisateur au second élément de réseau de service.

2. Procédé selon la revendication 1, dans lequel le trajet de retransmission de paquet de service comporte un tunnel de retransmission correspondant à un identifiant de flux de service, et l'établissement, par l'élément de réseau de plan de commande, du tunnel de retransmission correspondant à l'identifiant de flux de service entre le premier élément de réseau de service et le premier élément de réseau de plan de retransmission consiste à :
envoyer, par l'élément de réseau de plan de commande, une première requête d'établissement de session au premier élément de réseau de service, dans lequel la première requête d'établissement de session transporte une adresse IP du premier élément de réseau de plan de retransmission ; et
envoyer, par l'élément de réseau de plan de commande, une seconde requête d'établissement de session au premier élément de réseau de plan de retransmission, dans lequel la seconde requête d'établissement de session transporte une adresse IP du premier élément de réseau de service.

3. Procédé selon la revendication 1, dans lequel le trajet de retransmission de paquet de service comporte une politique de retransmission correspondant à un identifiant de flux de service, et l'établissement, par l'élément de réseau de plan de commande, de la politique de retransmission correspondant à l'identifiant de flux de service entre le premier élément de réseau de service et le premier élément de réseau de plan de retransmission consiste à :
distribuer, par l'élément de réseau de plan de commande au premier élément de réseau de service, la politique de retransmission transportant l'identifiant de flux de service pour que le premier élément de réseau de service retransmette sur la base de la politique de retransmission, le paquet de service correspondant à l'identifiant de flux de service ; et/ou
distribuer, par l'élément de réseau de plan de commande au premier élément de réseau de plan de retransmission, la politique de retransmission transportant l'identifiant de flux de service pour que le premier élément de réseau de plan de retransmission retransmette sur la base de la politique de retransmission, le paquet de service correspondant à l'identifiant de flux de service.

4. Procédé selon la revendication 1, dans lequel le trajet de retransmission de paquet de service comporte un tunnel de retransmission correspondant à un identifiant de flux de service, et avant l'établissement, par l'élément de réseau de plan de commande, du tunnel de retransmission correspondant à l'identifiant de flux de service entre le premier élément de réseau de service et le premier élément de réseau de plan de retransmission, le procédé consiste en outre à :
envoyer, par l'élément de réseau de plan de commande, une requête d'identification à un système de gestion, de sorte que le système de gestion renvoie un message de réponse d'identification transportant une adresse IP du premier élément de réseau de plan de retransmission ; et
en cas de réception du message de réponse d'identification du système de gestion, obtenir, par l'élément de réseau de plan de commande, l'adresse IP du premier élément de réseau de plan de retransmission à partir du message de réponse d'identification.

5. Procédé selon la revendication 1, dans lequel le trajet de retransmission de paquet de service comporte un tunnel de retransmission correspondant à un identifiant de flux de service et, avant l'établissement, par l'élément de réseau de plan de commande, du tunnel de retransmission correspondant à l'identifiant de flux de service entre le premier élément de réseau de service et le premier élément de réseau de plan de retransmission, le procédé consiste en outre à :
envoyer, par l'élément de réseau de plan de commande, une requête d'identification à un système de gestion pour que le système de gestion renvoie un message de réponse d'identification transportant une adresse IP du premier élément de réseau de service ; et
en cas de réception du message de réponse d'identification envoyé du système de gestion, obtenir, par l'élément de réseau de plan de commande, l'adresse IP du premier élément de réseau de service à partir du message de réponse d'identification.

6. Procédé selon la revendication 4 ou 5, dans lequel la requête d'identification transporte un type de service, ou transporte des informations d'emplacement actuel du terminal utilisateur et un type de service ; et le premier élément de réseau de plan de retransmission et/ou le premier élément de réseau de service est/sont configuré(s) par le système de gestion sur la base de la requête d'identification.

7. Procédé de commande de communication, consistant à :
établir, par un premier élément de réseau de service par l'intermédiaire d'un élément de réseau de plan de commande, un trajet de retransmission de paquet de service entre le premier élément de réseau de service et un premier élément de réseau de plan de retransmission fournissant un service de retransmission pour un terminal utilisateur ; et
émettre, par le premier élément de réseau de service, un paquet de service du terminal utilisateur par l'intermédiaire du trajet de retransmission de paquet de service ; dans lequel
le premier élément de réseau de plan de retransmission est déterminé par l'élément de réseau de plan de commande sur la base d'une requête de commande reçue relative au terminal utilisateur ;
dans lequel, après l'établissement, par un premier élément de réseau de service, d'un trajet de retransmission de paquet de service entre le premier élément de réseau de service et un premier élément de réseau de plan de retransmission fournissant un service de retransmission pour le terminal utilisateur, le procédé consiste en outre à :
recevoir, par le premier élément de réseau de service, une requête de transfert de contexte de l'élément de réseau de plan de commande ou d'un système de gestion ; et transférer, par le premier élément de réseau de service, des informations de contexte de service relatives au terminal utilisateur vers un second élément de réseau de service ; et
dans lequel, après la réception, par le premier élément de réseau de service, d'une requête de transfert de contexte envoyée de l'élément de réseau de plan de commande ou d'un système de gestion, le procédé consiste en outre à :
envoyer, par le premier élément de réseau de service, un message d'accusé de réception de transfert de contexte à l'élément de réseau de plan de commande.

8. Procédé selon la revendication 7, dans lequel le procédé consiste en outre à :
établir, par le premier élément de réseau de service, une correspondance entre l'identifiant de flux de service et le trajet de retransmission ; et
l'émission, par le premier élément de réseau de service, d'un paquet de service du terminal utilisateur par l'intermédiaire du trajet de retransmission de paquet de service consiste à :
recevoir, par le premier élément de réseau de service, le paquet de service transportant l'identifiant de flux de service ;
déterminer, par le premier élément de réseau de service sur la base de la correspondance entre l'identifiant de flux de service et le trajet de retransmission, le trajet de retransmission correspondant à l'identifiant de flux de service ; et
retransmettre, par le premier élément de réseau de service, le paquet de service par l'intermédiaire du trajet de retransmission correspondant à l'identifiant de flux de service.

9. Procédé de commande de communication, consistant à :
établir, par un premier élément de réseau de plan de retransmission par l'intermédiaire d'un élément de réseau de plan de commande, un trajet de retransmission de paquet de service entre le premier élément de réseau de plan de retransmission et un premier élément de réseau de service fournissant un service pour un terminal utilisateur selon l'une quelconque des revendications 1 à 6 ; et
émettre, par le premier élément de réseau de plan de retransmission, un paquet de service du terminal utilisateur par l'intermédiaire du trajet de retransmission de paquet de service, dans lequel le premier élément de réseau de plan de retransmission est déterminé par l'élément de réseau de plan de commande sur la base d'une requête de commande reçue relative au terminal utilisateur.

10. Procédé selon la revendication 9, dans lequel le procédé consiste en outre à :
établir, par le premier élément de réseau de plan de retransmission, une correspondance entre l'identifiant de flux de service et le trajet de retransmission ; et
l'émission, par le premier élément de réseau de plan de retransmission, d'un paquet de service du terminal utilisateur par l'intermédiaire du trajet de retransmission de paquet de service consiste à :
recevoir, par le premier élément de réseau de plan de retransmission, le paquet de service transportant l'identifiant de flux de service ;
déterminer, par le premier élément de réseau de plan de retransmission sur la base de la correspondance entre l'identifiant de flux de service et le trajet de retransmission correspondant à l'identifiant de flux de service, le trajet de retransmission correspondant à l'identifiant de flux de service ; et
retransmettre, par le premier élément de réseau de plan de retransmission, le paquet de service par l'intermédiaire du trajet de retransmission correspondant à l'identifiant de flux de service.

11. Élément de réseau de plan de commande, comprenant :
une unité de réception (11), configurée pour recevoir une requête de commande relative à un terminal utilisateur qui accède à un réseau par l'intermédiaire d'une première station de base ;
une unité de détermination (12), configurée pour déterminer, sur la base de la requête de commande, un premier élément de réseau de service fournissant un service pour le terminal utilisateur ; dans lequel
l'unité de détermination est en outre configurée pour déterminer un premier élément de réseau de plan de retransmission fournissant un service de retransmission pour le terminal utilisateur ; et
une unité d'établissement de trajet (13), configurée pour établir un trajet de retransmission de paquet de service entre le premier élément de réseau de service et le premier élément de réseau de plan de retransmission pour émettre un paquet de service du terminal utilisateur ;
dans lequel
l'unité de réception est en outre configurée pour recevoir une notification de transfert du terminal utilisateur si le terminal utilisateur est transféré de la première station de base à une seconde station de base ; et
l'unité d'établissement de trajet est en outre configurée pour établir, sur la base de la notification de transfert, un nouveau trajet de retransmission de paquet de service entre le second élément de réseau de service et le second élément de réseau de plan de retransmission pour émettre un paquet de service du terminal utilisateur, dans lequel le second élément de réseau de service est un second serveur ou un élément de réseau d'accès au service d'un second serveur ; et
dans lequel
l'unité d'envoi est en outre configurée pour envoyer une requête de transfert de contexte au premier serveur pour que le premier serveur transfère des informations de contexte de service relatives au terminal utilisateur au second serveur ; ou
l'unité d'envoi est en outre configurée pour envoyer une requête de transfert de contexte au premier serveur par l'intermédiaire du système de gestion pour que le premier serveur transfère des informations de contexte de service relatives au terminal utilisateur au second serveur.

12. Premier élément de réseau de service, comprenant :
une unité d'établissement de trajet (21), configurée pour établir un trajet de retransmission de paquet de service entre le premier élément de réseau de service et un premier élément de réseau de plan de retransmission fournissant un service de retransmission pour le terminal utilisateur ; et
une unité d'envoi (22), configurée pour émettre un paquet de service du terminal utilisateur par l'intermédiaire du trajet de retransmission de paquet de service ; dans lequel
le premier élément de réseau de plan de retransmission est déterminé par l'élément de réseau de plan de commande sur la base d'une requête de commande reçue relative au terminal utilisateur ;
dans lequel le premier élément de réseau de service comprend en outre une unité de transfert (23), dans lequel
l'unité de réception est en outre configurée pour recevoir une requête de transfert de contexte envoyée de l'élément de réseau de plan de commande ou d'un système de gestion ; et
l'unité de transfert est en outre configurée pour transférer des informations de contexte de service relatives au terminal utilisateur à un second serveur ; et
dans lequel
l'unité d'envoi est en outre configurée pour envoyer un message d'accusé de réception de transfert de contexte à l'élément de réseau de plan de commande.

13. Premier élément de réseau de plan de retransmission, comprenant :
une unité d'établissement de trajet (31), configurée pour établir un trajet de retransmission de paquet de service entre le premier élément de réseau de plan de retransmission et un premier élément de réseau de service fournissant un service pour un terminal utilisateur conformément au procédé selon la revendication 9 ou 10 ; et
une unité d'envoi (32), configurée pour émettre un paquet de service du terminal utilisateur par l'intermédiaire du trajet de retransmission de paquet de service, dans lequel le premier élément de réseau de plan de retransmission est déterminé par un élément de réseau de plan de commande sur la base d'une requête de commande reçue relative au terminal utilisateur.

14. Procédé selon l'une quelconque des revendications 1 à 8, ou élément de réseau de plan de commande selon la revendication 11, ou premier élément de réseau de service selon la revendication 12, dans lequel la requête de transfert de contexte comprend une IP du second serveur.
